# EUROPEAN PATENT SPECIFICATION

(11) **EP 1 855 212 B1**
(45) Date of publication and mention of the grant of the patent: **09.06.2010**
(21) Application number: 05719742.8
(22) Date of filing: 23.02.2005
(51) Int. Cl.: G06F 17/30

(54) **DOCUMENT MANAGEMENT SYSTEM**
DOKUMENTVERWALTUNGSSYSTEM
SYSTEME DE GESTION DE DOCUMENTS

(43) Date of publication of application: 14.11.2007
(73) Proprietor: HITACHI, LTD., Chiyoda-ku Tokyo 100-8280 (JP)
(72) Inventor: IKEDA, Hisashi, Hitachi, Ltd., Intell. Prop. Group, Chiyoda-ku, Tokyo 100-8220 (JP); FURUKAWA, Naohiro, Hitachi, Ltd., Intell. Prop. Group, Chiyoda-ku, Tokyo 100-8220 (JP); IWAYAMA, Makoto, Hitachi, Ltd., Intell. Prop. Group, Chiyoda-ku, Tokyo 100-8220 (JP); IMAICHI, Osamu, Hitachi, Ltd., Intell. Prop. Group, Chiyoda-ku, Tokyo 100-8220 (JP); SATO, Yusuke, Hitachi Ltd., Intell. Prop. Group, Chiyoda-ku, Tokyo 100-8220 (JP)
(74) Representative: Strehl Schübel-Hopf & Partner
(86) International application number: PCT/JP2005/003427
(87) International publication number: WO 2006/090481

(56) References cited:
- EP-A- 0 495 612
- EP-A- 0 617 562
- JP-A- 6 343 146
- JP-A- 08 161 214
- JP-A- 2002 063 168
- JP-A- 2002 251 393
- US-A- 4 841 387
- US-A1- 2002 158 904
- US-A1- 2003 095 724
- US-B1- 6 249 276
- US-B1- 6 507 838

## Description

### FIELD OF THE INVENTION

This invention relates to an information management system for managing a document or the like, and more particularly, to a technology for managing access to a document under management.

### BACKGROUND OF THE INVENTION

In recent years, as a result of advancement of a digital technology, it has become possible to digitize hand-written information written on paper with ease.

Currently, a computer manages only an electronic document obtained by digitizing a paper document. Under this condition, hand-written information wrote to the paper document is not managed digitally, which makes it impossible to effectively use the hand-written information.

As a technology for solving this problem, there is known an electronic meeting system disclosed in JP 2000-092048 A. In the electronic meeting system disclosed in JP 2000-092048 A, management of a meeting material converted into electronic data and preparation work necessary for holding a meeting are semiautomatically performed. To this end, the technology includes the steps of: registering a meeting material in a meeting server before a meeting starts and automatically creating an attribute file of the meeting material; managing the meeting material; automatically creating a meeting index based on information extracted from the attribute file; automatically distributing the material and the meeting index to every participant's terminal before the meeting starts; converting a memo inputted through a keyboard during the meeting into a minutes format and creating the minutes; creating a list of contents registered in the meeting server; and automatically distributing an added material to every participant's terminal. Accordingly, it is possible to semiautomatically perform the management of the electronized meeting material and the preparation work necessary for holding a meeting such as the creation of the meeting index and the automatic distribution of the meeting material.

In addition, in a customer management system disclosed in JP 07-334570 A, a barcode or a customer code, which can be mechanically read by an OCR or the like, is previously printed on an application form to be issued and distributed based on a customer master. Then, by using the application form returned from a person who wishes to attend, the customer code is mechanically read to be obtained by an automatic data entry device using an optical reading method, a method of extracting the customer code by software from a facsimile reception signal, or the like. After that, the application of the customer is registered in the customer master. At the time of attendance, the customer code is mechanically read from a participant card, and is received/registered. Therefore, the registration can be processed speedily and mechanically, so the issuing of the participant card and a meeting schedule list useful for reservation of a hall, processing of analyzing the participant, or the like can be performed timely based on the registered customer master. Accordingly, it is possible to speedily perform the registration of application for the attendance reservation at the meeting such as a seminar and the reception register processing at the time of the attendance.

Also, a pen-type input device (digital pen) that digitally obtains a path of a pen tip is put to practical use. The digital pen inputs the obtained pen tip path into a computer. Examples of the digital pen include the "Anoto pen" developed by Anoto AB in Sweden. Details of the digital pen are described in WO 01/71473 A1. The digital pen has an advantage in that it is possible even for a user who is not used to using a keyboard or a mouse to use the pen easily, and is therefore expected to be applied to application tasks in an electronic government and other fields.

EP-A-0 617 562 discloses a system for playing back desired parts of continuous data by using input events as clues.

### SUMMARY OF THE INVENTION

In the related technologies described above, in a case where a plurality of users participate in any one of a plurality of meetings that are being held simultaneously, it has been unable to find out which meeting each of the users have participated in. Therefore, it is difficult to determine which video information each user's handwritten memo should be linked to.

When each user's handwritten memo is made public widely, any person can access the video information linked to the handwritten memo. However, it may be necessary to place a limitation on those who can view the information depending on the importance of the information. Therefore, it becomes necessary to set access limitations (securities) for the link information includes in the handwritten memo and for the video information, for instance, to permit only a specific user to access the video information from the handwritten memo.

When the user writes a memo in correspondence with a given scene and topic, the writing of the memo often lags behind the scene. Therefore, it is necessary to set a link to an appropriate position of a video related to the memo even in a case where an write time period of the memo becomes out of synchronization.

Further, it is necessary to link a handwritten memo to the corresponding position (scene) of a video even in a case where a viewed video is not continuously played back due to pausing or fast-forwarding thereof.

According to the present invention, there is provided an information management system as defined by independent claim 1.

According to this invention, it is possible to effectively use the event data associated with the handwritten information while setting a security for each user.

### BRIEF DESCRIPTION OF THE DRAWINGS

FIG. 1 is a conceptual drawing illustrating a process of a document management system according to embodiments of this invention.
FIG. 2 is a block diagram of a configuration of the document management system according to a first embodiment of this invention.
FIG. 3 is a block diagram of a content server according to the first embodiment.
FIG. 4 is a block diagram of an information terminal according to the first embodiment.
FIG. 5 is a block diagram of a event information input device according to the first embodiment.
FIG. 6 is a diagram of a configuration of event information stored in the content server according to the first embodiment.
FIG. 7 is a diagram of a configuration of media view information stored in the content server according to the first embodiment.
FIG. 8A is a diagram of a configuration of distributed material information stored in the content server according to the first embodiment.
FIG. 8B is a diagram of a configuration of handwritten memo-related information stored in the content server according to the first embodiment.
FIG. 9 is an explanatory diagram of obtainment of coordinates on paper by a digital pen according to the first embodiment.
FIG. 10 is an explanatory diagram of a document registered in the content server according to the first embodiment.
FIG. 11 is an explanatory diagram of the document on which information has been written with the digital pen according to the first embodiment.
FIG. 12A shows an example of a stroke set according to the first embodiment.
FIG. 12B is a diagram of a configuration of stroke set information stored in the content server according to the first embodiment.
FIG. 12C is a diagram of a configuration of stroke coordinate information stored in the content server according to the first embodiment.
FIG. 13 is a diagram of a configuration of user information stored in the content server according to the first embodiment.
FIG. 14 is a flowchart of written-data accumulating processing according to the first embodiment.
FIG. 15 is a flowchart of processing of generating a link set from a handwritten memo to each type of information obtained during the meeting according to the first embodiment.
FIG. 16 is a flowchart of processing of determining time information of the stroke set according to the first embodiment.
FIG. 17 is a flowchart of processing of retrieving various kinds of information obtained during the meeting based on a handwritten memo according to the first embodiment.
FIG. 18 is an explanatory diagram of a content viewer according to the first embodiment.
FIG. 19 is a flowchart of written-data accumulating processing according to a second embodiment of this invention.
FIG. 20 is an explanatory diagram of a meeting attendance form according to the second embodiment.
FIG. 21 is a flowchart of written-data accumulating processing according to an example of this invention.
FIG. 22 is a flowchart of written-data accumulating processing according to an example of this invention.
FIG. 23 is an explanatory diagram of a meeting attendance form according to the example.
FIG. 24 is a flowchart of processing of retrieving various kinds of information obtained during the meeting based on a handwritten memo according to an example embodiment of this invention.

### DETAILED DESCRIPTION OF THE PREFERRED EMBODIMENT

Description will be made of embodiments of this invention with reference to the drawings.

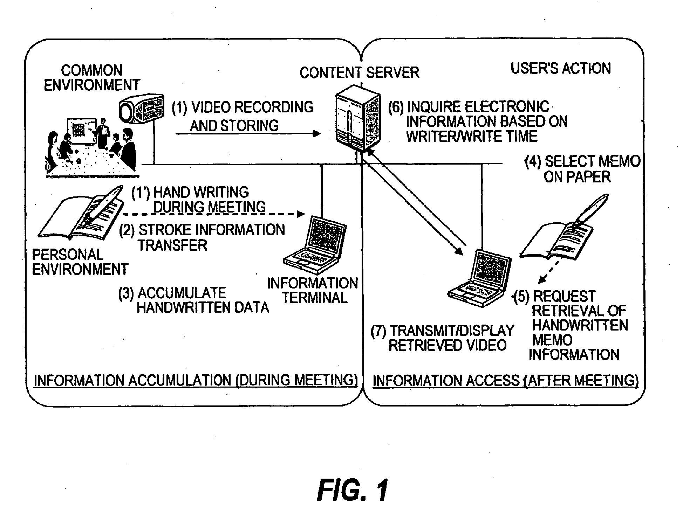

FIG. 1 is a conceptual drawing illustrating processing of a document management system according to embodiments of this invention.

First, processing of an information accumulation phase will be described. The information accumulation phase is executed mainly during a meeting, and causes a content server to accumulate information involved in the meeting.

At the start of an event (e.g., meeting), a camera set in a meeting room starts to record a video of the event. The content server acquires through a network the video of the event taken by the camera, and stores the video of the event (1). An attendant (user of a digital pen) at the meeting uses the digital pen to write a memo or the like related to contents of the meeting on a distributed material (or one's own notebook) during the meeting (1').

The digital pen establishes a connection with an information terminal used by the user, and transfers stroke information written during the meeting to the information terminal (2). It should be noted that the transfer of the stroke information from the digital pen to the information terminal may be performed after the meeting, instead of during the meeting.

Upon reception of the stroke information from the digital pen, the information terminal transmits the stroke information to the content server. The content server accumulates stroke information in handwritten characters (3).

Second, processing of an information access phase will be described. The information access phase is executed after the meeting, and causes the content server to provide the user with information necessary for the user.

After the meeting, by using the digital pen, the user selects the handwritten memo on the distributed material (or on one's own notebook) to thereby request electronic information related to the handwritten memo (4). The digital pen establishes a connection with the information terminal used by the user, and transfers a location of the selected handwritten memo (location designated by the user with the digital pen) to the information terminal.

The information terminal transmits the location selected by the user with the digital pen to the content server to request retrieval of the handwritten memo at the designated location (5).

Upon reception of the request for the retrieval of the handwritten memo, the content server retrieves the electronic information related to the handwritten memo (e.g., video recorded during the event) with a writer and write time of the handwritten memo as search keys (6). It may be judged at the same time whether or not the user who has requested the electronic information has a right to view the retrieved electronic information.

Then, the content server transmits the retrieved video to the requesting source information terminal (7).

After that, the information terminal displays the electronic information transmitted from the content server.

According to this invention, the user can obtain the electronic information related to the handwritten memo by selecting the handwritten memo.

### (First Embodiment)

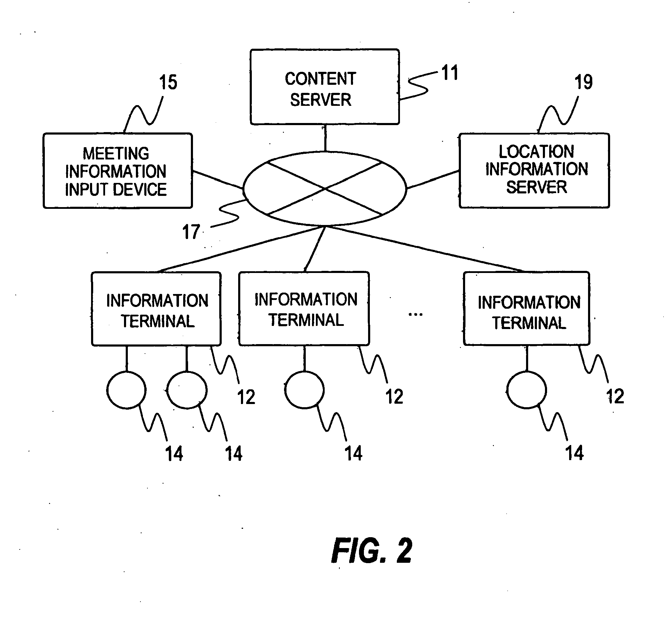

FIG. 2 is a block diagram of a document management system according to a first embodiment of this invention.

The document management system comprises a content server 11, information terminals 12, digital pens 14, an event information input device 15, a network 17, and a location information server 19.

The content server 11, the information terminals 12, the event information input device 15, and the location information server 19 are connected to one another through the network 17. Each of the information terminals 12 is connected to one or more digital pens 14. The information terminals 12 and the digital pens 14 may be connected by a wire using a universal serial bus (USB) protocol or the like. Alternatively, the information terminals 12 and the digital pens 14 may be connected wirelessly using Bluetooth, a wireless LAN, a mobile telephone system, infrared rays, or the like.

The content server 11 manages contents for each event, and transmits requested contents to the information terminal 12. It should be noted that the contents include a document, audio, and video related to an event. The document represents all of information printed and displayed on a paper medium.

The information terminal 12 is a computer device used by each person, and transfers information received from the digital pen 14 to the content server 11. The information terminal 12 also displays the information received from the content server 11.

As in the case of an ordinary pen, with the digital pen 14, it is possible to write characters, figures, and the like on a paper medium. Also, the digital pen 14 comprises a micro-camera at its tip end and obtains a dot pattern of a position on the paper that comes into contact therewith. Further, the digital pen 14 holds a pen ID set in advance. The digital pen 14 further comprises a communication interface for connection with the information terminal 12 in a wired or wireless manner.

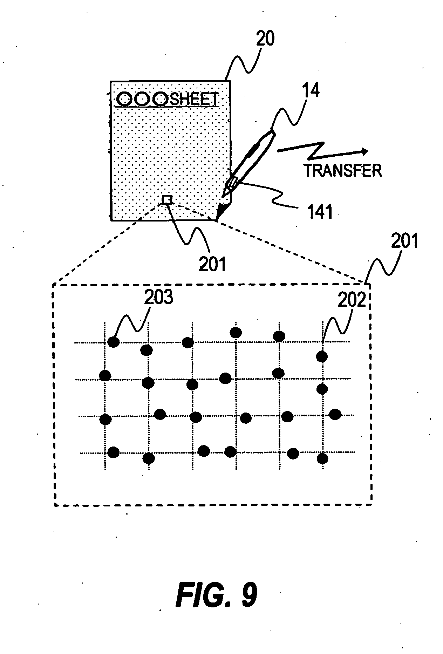

For instance, as shown in FIG. 9, the digital pen 14 obtains dot pattern information printed on a document. Thus, it is possible to identify coordinates on the paper from the dot pattern information obtained by the digital pen 14.

Further, the digital pen 14 may transmit, through a mobile telephone system or a wireless LAN system instead of the information terminal 12, the identified absolute coordinates, a time at which the dot pattern has been obtained, and the pen ID directly to the content server 11.

The event information input device 15 is a computer device set in the meeting room, and creates information (e.g., video, image, audio, and/or slide) related to an event. The event information input device 15 also registers the contents including the document and the created video in the content server 11 in association with the event.

In addition, the event information input device 15 may establish a connection with the digital pen 14 during the meeting, obtain information such as absolute coordinates identified by the digital pen 14, and transmit the obtained information to the content server 11.

The location information server 19 is a computer device including a CPU, a memory, and a storage device, and holds a database in which the coordinates on a paper medium are associated with an amount by which a dot pattern of the paper medium is displaced from a reference point. Based on the dot pattern of the paper medium, the location information server 19 also provides the coordinates on the paper medium.

It should be noted that the document management system of this embodiment may be equipped with a printer. In response to an instruction sent from the information terminal 12, the printer prints the content such as a document.

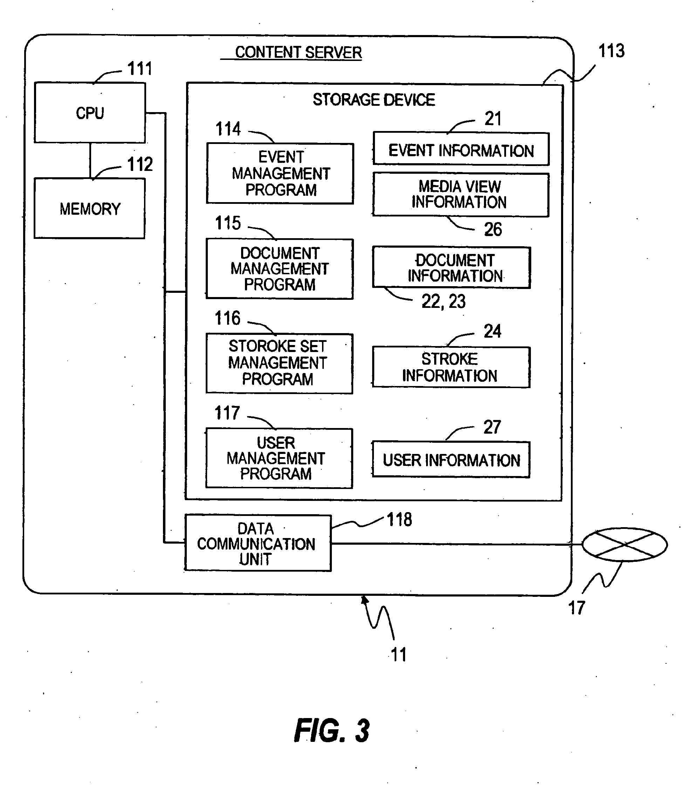

FIG. 3 is a block diagram of the content server 11 according to the first embodiment of this invention.

The content server 11 comprises a CPU 111, a memory 112, a storage device 113, and a data communication unit 118.

The CPU 111 performs various kinds of processing by invoking and executing various kinds of programs stored in the storage device 113.

The memory 112 has a work area in which data used by the CPU 111 in the various kinds of processing is stored temporarily.

The storage device 113 is constituted by a nonvolatile storage medium (e.g., magnetic disk drive). The storage device 113 stores an event management program 114, a document management program 115, a pen data management program 116, and a user management program 117. Those programs are loaded into the memory 112, and are then executed by the CPU 111, thereby performing the various kinds of processing.

The storage device 113 stores event information 21, media view information 28, document information 22 and 23, stroke information 24, and user information 27.

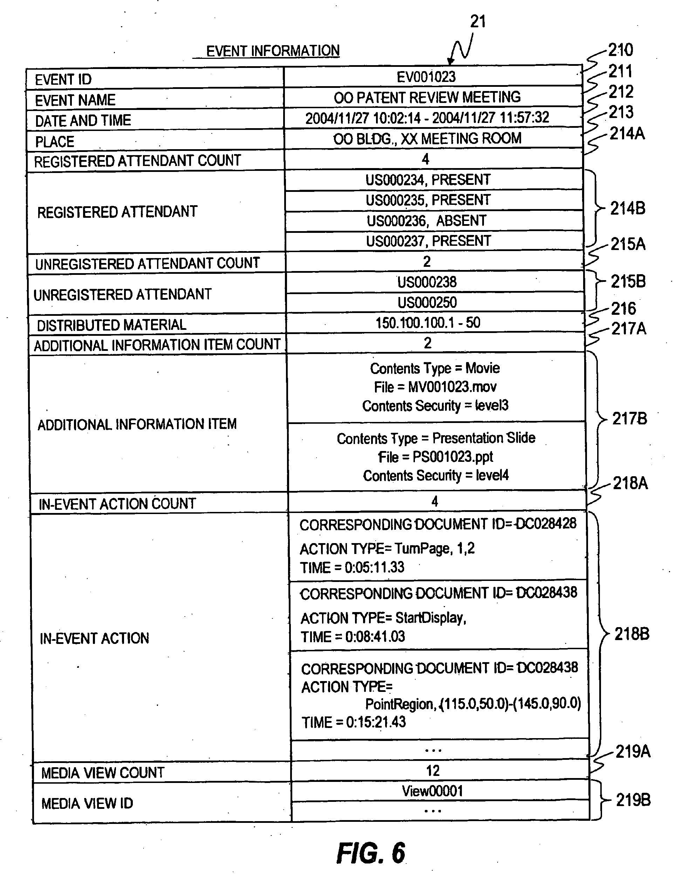

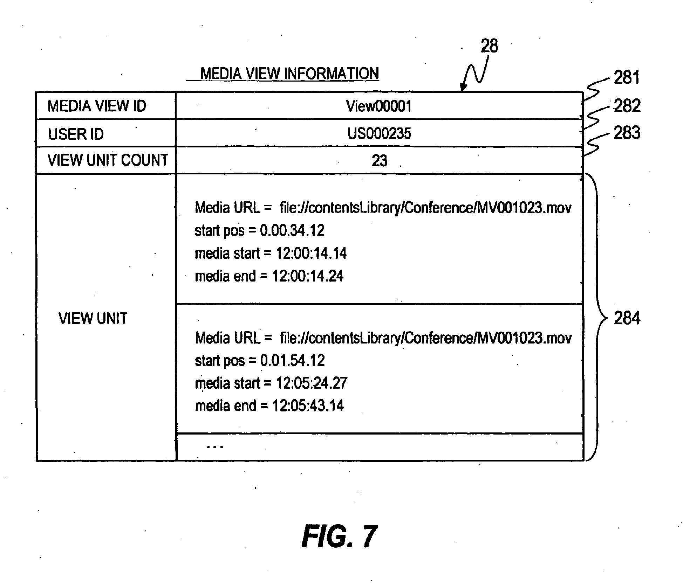

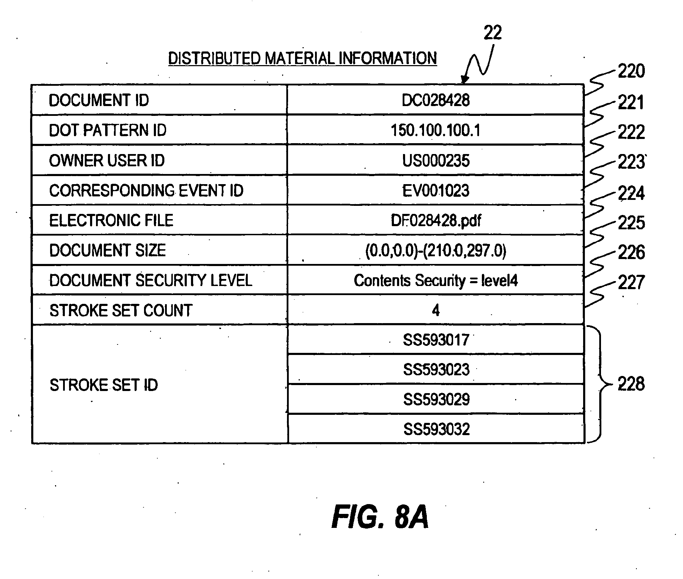

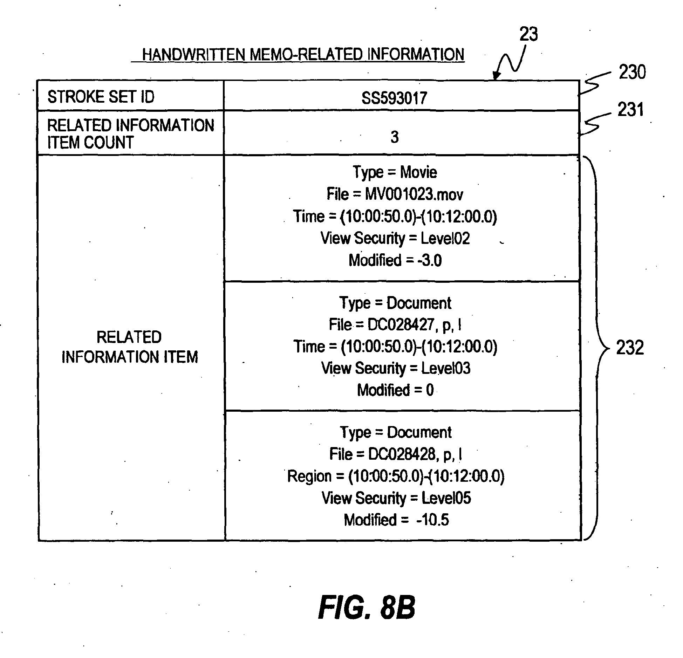

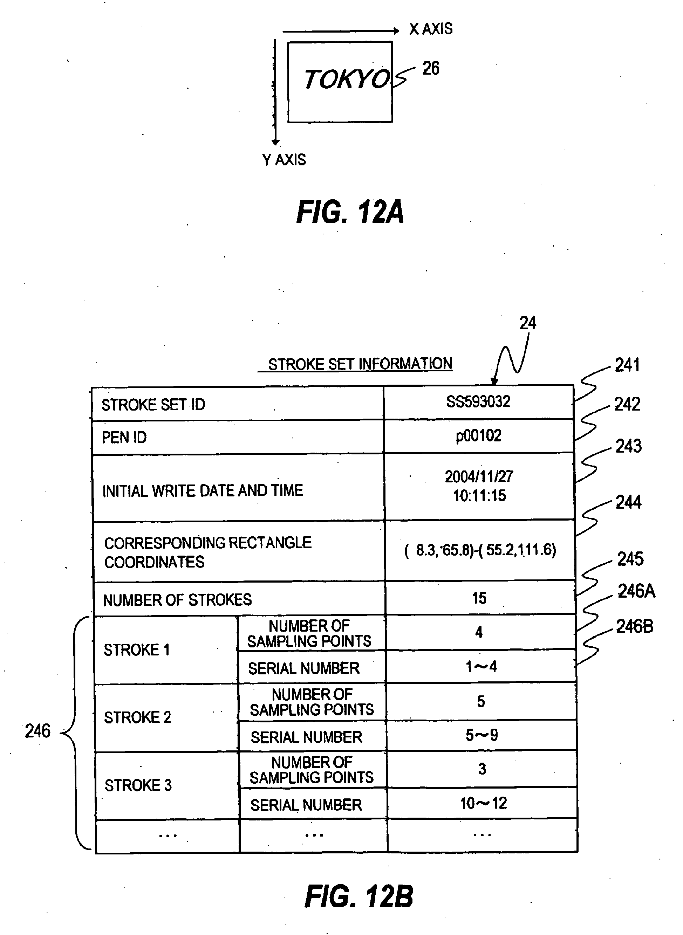

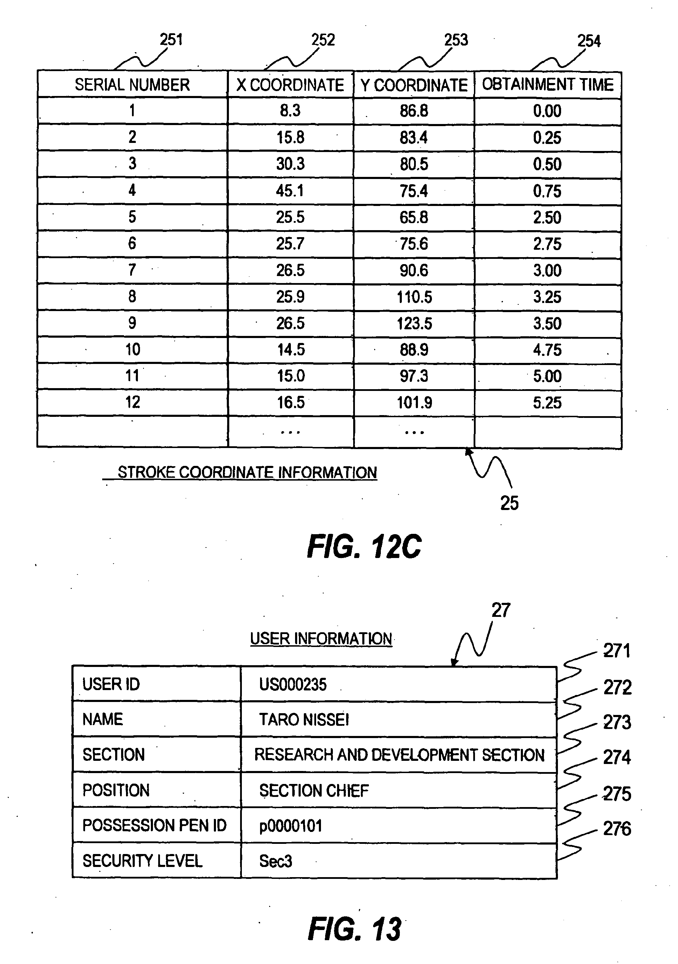

The event management program 114 manages information including the event information 21 (shown in FIG. 6) and the media view information 28 (shown in FIG. 7). The document management program 115 manages the document information 22 and 23 (shown in FIGS. 8A and 8B, respectively). The stroke set management program 116 manages the stroke information 24 (shown in FIG. 12B). The user management program 117 manages the user information 27 (shown in FIG. 13).

The data communication unit 118 is network interface. The network interface is a LAN card that is capable of performing communication using a TCP/IP protocol, for instance. The content server 11 is capable of communicating with a device connected to the network 17, such as the information terminal 12.

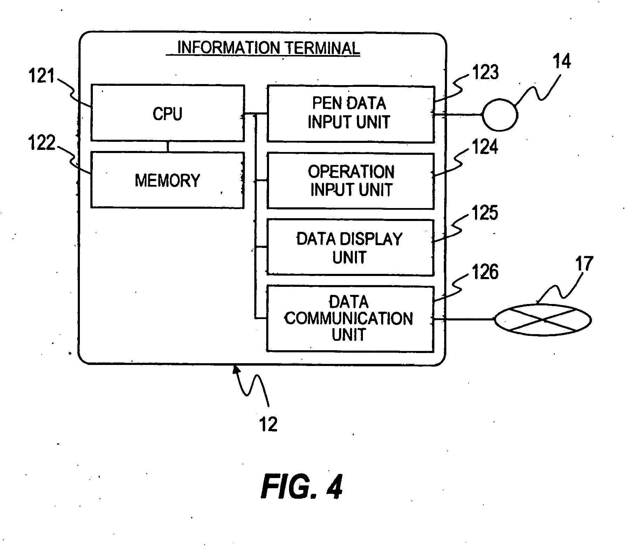

FIG. 4 is a block diagram of the information terminal 12 according to the first embodiment of this invention.

The information terminal 12 comprises a CPU 121, a memory 122, a pen data input unit 123, an operation input unit 124, a data display unit 125, and a data communication unit 126.

The CPU 121 invokes and executes various programs stored in a storage device (not shown), thereby performing various kinds of processing.

The memory 122 has a work area in which data used by the CPU 121 in the various kinds of processing is stored temporarily. Also, the memory 122 temporarily stores data sent from the content server 11, the digital pen 14, and the like.

The pen data input unit 123 communicates with the digital pen 14 in a wired manner or a wireless manner and collects information on coordinates and the like obtained by the digital pen 14.

The operation input unit 124 is a keyboard, for instance, and is used by a user to input information.

The data display unit 125 is composed of a liquid crystal display, for instance, and displays contents such as a document obtained from the content server 11.

The data communication unit 126 is a network interface such as a LAN card that is capable of performing communication using a TCP/IP protocol. With this construction, it becomes possible for the information terminal 12 to communicate with the content server 11 through the network 17.

It should be noted that the pen data input unit 123 and the data communication unit 126 may be a single interface.

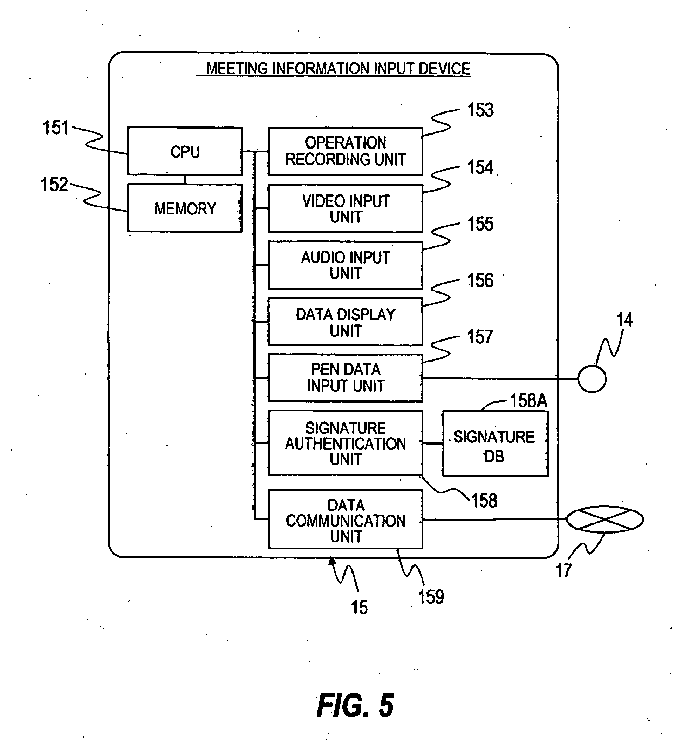

FIG. 5 is a block diagram of the event information input device 15 according to the first embodiment.

The event information input device 15 comprises a CPU 151, a memory 152, an operation recording unit 153, a video input unit 154, an audio input unit 155, a data display unit 156, a pen data input unit 157, a signature authentication unit 158, a signature database (DB) 158A, and a data communication unit 159.

The CPU 151 invokes and executes various programs stored in a storage device (not shown), thereby performing various kinds of processing.

The memory 152 has a work area in which data used by the CPU 151 in the various kinds of processing is stored temporarily. Also, the memory 152 temporarily stores data sent from the content server 11, the digital pen 14, and the like.

The operation recording unit 153 records an operation performed with respect to the document management system during the meeting. Examples of the recorded operation include an operation (operation such as rewind or fast forward for a video used during the meeting) performed on a keyboard by a presenter.

The video input unit 154 collects video data taken during the meeting by the camera set in the meeting room.

The audio input unit 155 collects audio data recorded during the meeting by a microphone set in the meeting room.

The data display unit 156 is constituted by a large-screen display device such as a projector set in the meeting room, and displays data used during the meeting. Examples of the displayed data include a presentation material used by the presenter and a document obtained from the content server 11.

The pen data input unit 157 communicates with the digital pen 14 in a wired manner or a wireless manner, and collects information including coordinates and the like obtained by the digital pen 14.

The signature authentication unit 158 authenticates a meeting attendant based on his/her signature to verify his/her identification. To this end, the signature authentication unit 158 uses the signature DB 158A in which the signature of the meeting attendant is registered in advance. The signature DB 158A may be stored in the event information input device 15, or may be stored in another device (e.g., content server 11) connected to the .network 17. Alternatively, it is possible to separately provide a signature database server.

The data communication unit 159 is a network interface. Examples of the network interface include a LAN card that allows communications using a TCP/IP protocol. This allows the event information input device 15 to communicate with the content server 11 via the network 17.

FIG. 6 is a diagram of a configuration of the event information 21 stored in the content server 11 according to the first embodiment.

The event information 21 includes an event ID 210, an event name 211, a date and time 212, a place 213, a registered attendant count 214A, a registered attendant 214B, an unregistered attendant count 215A, an unregistered attendant 215B, a distributed material 216, an additional information item count 217A, an additional information item 217B, an in-event action count 218A, an in-event action 218B, a media view count 219A, and a media view ID 219B. In the event information 21, one record is generated each time an event such as a meeting takes place.

The event ID 210 is a unique identifier of an event. For instance, the event management program 114 determines the event ID 210 automatically according to an arbitrary rule, and records the event ID 210 in the event information 21.

The event name 211 is a name of the event.

The date and time 212 is a start date and time and end date and time of the event.

The place 213 is a place where the event is held.

The registered attendant count 214A is the number of attendants at the event who have been registered in advance. It should be noted that the number of recorded registered attendants 214B is equal to the registered attendant count 214A.

Recorded as the registered attendant 214B is a unique user ID of each registered attendant at the event and presence/absence thereof.

The unregistered attendant count 215A is the number of attendants at the event who have not been registered in advance. It should be noted that the number of recorded unregistered attendants 215B is equal to the unregistered attendant count 215A.

Recorded as the unregistered attendant 215B is a unique user ID of each unregistered attendant at the event. It should be noted that, as will be described later, the unregistered attendant 215B is identified by an ID of the digital pen 14 used by the attendant or a signature of the attendant.

By recording a registered attendant, an absentee who has planned to participate (registered absentee), and an unregistered attendant in a manner distinguishable from one another as described above, it is possible to provide the system with security based on a level of each individual. For instance, the system may prohibit the absentee from viewing a video of the meeting, or may prohibit the unregistered attendant from viewing the distributed material.

The distributed material 216 corresponds to an ID of the dot pattern used for a material distributed at the event. The example shown in the drawing indicates that 50 different dot patterns of 150.100.10.1 to 150.100.10.50 are used for the event as the distributed material.

During the event and/or after the event, when writing is made on a distributed material with the digital pen 14, the event is identified by a distributed material ID of a corresponding document on which characters and the like have been written.

The additional information item count 217A is the number of additional information items related to the event. It should be noted that the number of recorded additional information items 217B is equal to the additional information item count 217A.

The additional information item 217B is an information item such as a video, image, audio, or slide related to the event. To be specific, examples of the information item recorded as the additional information item 217B include video data obtained by photographing the event, audio data obtained by recording the event, and a slide used at the event. Recorded as the additional information item 217B are a type of additional information item, a file name of the additional information item, and a content security set for the additional information item.

The in-event action count 218A is the number of actions performed during the event. It should be noted that the number of recorded in-event actions 218B is equal to the in-event action count 218A.

The in-event action 218B is a detail of the action performed during the event. The in-event action 218B includes an ID of a document related to the action (corresponding document ID), a type of action, and a time at which the action is performed. It should be noted that the time is represented as a relative time with the start time of the event as a reference.

To be specific, a first data item of the in-event action 218B indicates that a presenter turned a material whose document ID was "DC028428" from page 1 to page 2 at the relative time of 5 minutes and 11.33 seconds (5 minutes and 11.33 seconds after the start of the meeting). A second data item of the in-event action 218B indicates that projection of a material whose document ID was "DC028438" started at the relative time of 8 minutes and 41.03 seconds. A third data item of the in-event action 218B indicates that the presenter pointed at a position of coordinates (115.0,50.0)-(145.0,90.0) on the material whose document ID was "DC028438" at the relative time of 15 minutes and 21.43 seconds.

The media view count 219A is the number of times that video data obtained by video-recording the event. It should be noted that the number of recorded media view IDs 219B is equal to the media view count 219A.

The media view ID 219B is an identifier of information on viewing the video data obtained by video-recording the event, and has a link to media view information 28 (shown in FIG. 7).

FIG. 7 is a diagram of a configuration of the media view information 28 stored in the content server 11 according to the first embodiment.

The media view information 28 includes a media view ID 281, a user ID 282, a view unit count 283, and a view unit 284. In the media view information 28, one record is generated each time a user views a content.

The media view ID 281 is a unique identifier for identifying the event. For instance, the event management program 114 determines the media view ID 281 each time a content is viewed, and records the media view ID 281 in the media view information 28.

The user ID 282 is an ID of a user who viewed the content.

The view unit count 283 is the number of continuous playback durations of the viewed content. In other words, a duration in which the viewer has continuously viewed the content without stop is set as a view unit. Recorded as the view unit count 283 is the number of view units. It should be noted that the number of recorded view units 284 is equal to the view unit count 283.

The view unit 284 is detailed information on a view unit. To be specific, recorded as the view unit 284 are a storage location of a viewed content ("Media URL" serving as a file name including a path name), a position of a content at which viewing of one unit thereof started ("start pos" expressed by a relative time from the head of the content), a time at which viewing of the one unit started ("media start"), and a time at which the viewing of the one unit ended ("media end").

For instance, a first data item of the view unit count 283 indicates that a portion of a video file "MV001023.mov" stored at "file://contentsLibrary/Conference" was started to be viewed from the position 34.12 seconds from the head of the file started at 12:00 and 14.14 seconds and ended at 12:00 and 14.24 seconds.

Next, description will be made of document information stored in the content server 11 according to the first embodiment. The document information includes distributed material information 22 and handwritten memo-related information 23.

FIG. 8A is a diagram of configuration of the distributed material information 22 out of the document information stored in the content server 11 according to the first embodiment.

The distributed material information 22 includes a document ID 220, a dot pattern ID 221, an owner user ID 222, a corresponding event 223, an electronic file 224, a document size 225, a document security level 226, a stroke set count 227, and a stroke set ID 228.

The document ID 220 is a unique identifier of a document. It should be noted that documents owned by different persons are recognized as different documents even when the documents have the same information, and are therefore assigned with different document IDs 220, generating different records of the distributed material information 22. Documents to be distributed to different users are normally printed along with different dot patterns before distribution thereof.

The dot pattern ID 221 is an identifier of a dot pattern printed on the document.

The owner user ID 222 is a unique identifier of a user who owns the document.

The corresponding event ID 223 is a unique identifier of an event associated with the document. Normally recorded as the corresponding event ID 223 is the event ID of the meeting where the document is distributed, and the corresponding event ID 223 corresponds to the event ID210 of the event information 21.

The electronic file 224 is a file name of electronic data of the document.

The document size 225 indicates a size of paper suitable for printing the document. Stored as the document size 225 are coordinates of an upper left-hand corner of an area of the paper and coordinates of a lower right-hand corner thereof. In the example shown in the drawing, the document size 225 is expressed in millimeters with the upper left-hand corner being an origin point.

The document security level 226 indicates how confidential the document is. As will be described later, based on the document security level 226 and a security level 276 of a user (shown in FIG. 13), it is determined whether or not the user can view the document.

The stroke set count 227 is the number of stroke sets written on the document with the digital pen 14. It should be noted that the number of recorded stroke set IDs 228 is equal to the stroke set count 227.

The stroke set is a group of mutually related lines (strokes), and is obtained by using, for instance, layout analysis in character recognition. In the layout analysis, the mutually related lines are identified based on times when the lines were written and/or locational relationships between the lines. Thus, the stroke set is obtained. In other words, strokes written at close times and close locations constitute one stroke set.

The stroke set ID 228 is a unique identifier of a stroke set written on the document, and has a link to handwritten memo-related information (shown in FIG. 8B) and the stroke information 24 (shown in FIG. 12B).

FIG. 8B is a diagram of configuration of the handwritten memo-related information 23 out of the document information stored in the content server 11 according to the first embodiment.

The handwritten memo-related information 23 includes a stroke set ID 230, a related information item count 231, and a related information item 232. In the handwritten memo-related information 23, one record is generated for each stroke set.

The stroke set ID 230 is a unique identifier of the stroke set, which is the same as a stroke set ID 241 of stroke data (shown in FIG. 12B) .

The related information item count 231 is the number of information items associated with the stroke set. It should be noted that the number of recorded related information items 232 is equal to the related information item count 231.

The related information item 232 is data related to the stroke set. To be specific, examples of the data include a video data when the stroke set was written, a presentation material used by an explainer when the stroke set was written, and a distributed material on which the stroke set was written.

For instance, a related information item described as a first data item of the related information item 232 is a video data ("Movie") whose file name is "MV001023.mov", and includes data obtained at time instants during a time period from 10:00 and 50.0 seconds to 10:12 and 00.0 seconds out of time instants when the stroke set was written. It should be noted that the time period during which the stroke set was written extends from 10:00 and 50.0 seconds to 10:12 and 00.0 seconds, so all the data recorded as the related information items exists within the entire time period from the start to the end of writing of the stroke set.

In addition, a security level ("View Security") at which the stroke set is viewed is "02". Further, when the stroke set was written, a user has rewound the video by 3.0 seconds.

It should be noted that in a case where a state of progress of an information item recorded as the related information item is grasped when the stroke set is written, a location (page number and line number) on information item at the time is recorded. The state of progress of the information item is identified by a location thereon pointed by a presenter.

Further, when the data item recorded as the related information item is a paper information item on which the stroke set has been written, the location (page number and line number) where the stroke set has been written is recorded.

FIG. 9 is an explanatory diagram of obtainment of relative coordinates on paper by the digital pen 14 according to the first embodiment of this invention.

The digital pen 14 comprises a CPU, a memory, a processor, a communication interface, a camera 141, a battery, and a writing pressure sensor. Also, the digital pen 14 comprises a pen tip with which it is possible to write characters, symbols, and the like on paper with ink or graphite.

The digital pen 14 is used together with a sheet 20 on which dots 203 for location detection have been printed. Here, the dots 203 will be described by magnifying a part 201 of the sheet 20. On the sheet 20, a plurality of small dots 203 have been printed. Those dots 203 have been printed at locations displaced from intersections (reference points) 202 of virtual lattice lines upwardly, downwardly, rightwardly, or leftwardly.

When a character or a figure is written on the paper with the digital pen 14, the written character or the like remains on the paper in such a manner that visual recognition is possible. When detecting that the pen tip has come into contact with the paper using the writing pressure sensor, the digital pen 14 photographs the dots 203 printed on the paper with the camera 141. For instance, the digital pen 14 photographs an area including six by six dots 203.

The digital pen 14 obtains absolute coordinates, at which the dot pattern exists, from the photographed dot pattern. Those absolute coordinates are coordinates at which the dot pattern exists in a vast plane area. The vast plane area is an entire area in which arrangement of dot patterns without overlapping is possible.

The digital pen 14 transmits the obtained absolute coordinates to the information terminal 12. The information terminal 12 transmits the absolute coordinates transmitted from the digital pen 14 to the content server 11.

The content server 11 transmits the absolute coordinates obtained from the digital pen 14 to the location information server 19. The location information server 19 identifies the location (dot pattern ID) of the paper in the vast plane area and coordinates (relative coordinates) on the paper medium based on the absolute coordinates transmitted from the content server 11 and transmits the identified dot pattern ID and relative coordinates to the content server 11.

In the manner described above, the content server 11 obtains the dot pattern ID and the relative coordinates from the dot pattern photographed by the digital pen 14.

By obtaining information on contact locations of the pen tip at predetermined timings (e.g., periodically), it is possible to grasp a movement of the pen tip.

In other words, the digital pen 14 transmits the absolute coordinates corresponding to the photographed dot pattern, a photographed time of the dot pattern, and the pen ID to the information terminal 12.

The content server 11 obtains the relative coordinates from the location information server 19 based on the absolute coordinates obtained by the digital pen 14. The content server 11 obtains a path (stroke information) of the pen tip from the obtained relative coordinates and the time at which the dot pattern has been photographed.

It should be noted that the location information server 19 may be included in the content server 11 instead of being provided separately.

Also, it is not required for the digital pen 14 to use the location information server 19 in order to identify the dot pattern ID and the relative coordinates. For instance, the sheet is identified based on a two-dimensional barcode or an IC tag embedded in the sheet 20. In addition, it is possible to identify locations (relative coordinates) on the sheet using a tablet. It should be noted that one of the sheet identification using a µ-chip or the like and the location identification on the sheet using the tablet may be combined with the absolute coordinate identification by the location information server 19. In this case, it becomes possible to alleviate a load of processing in which the document management system identifies the dot pattern ID and the relative coordinates.

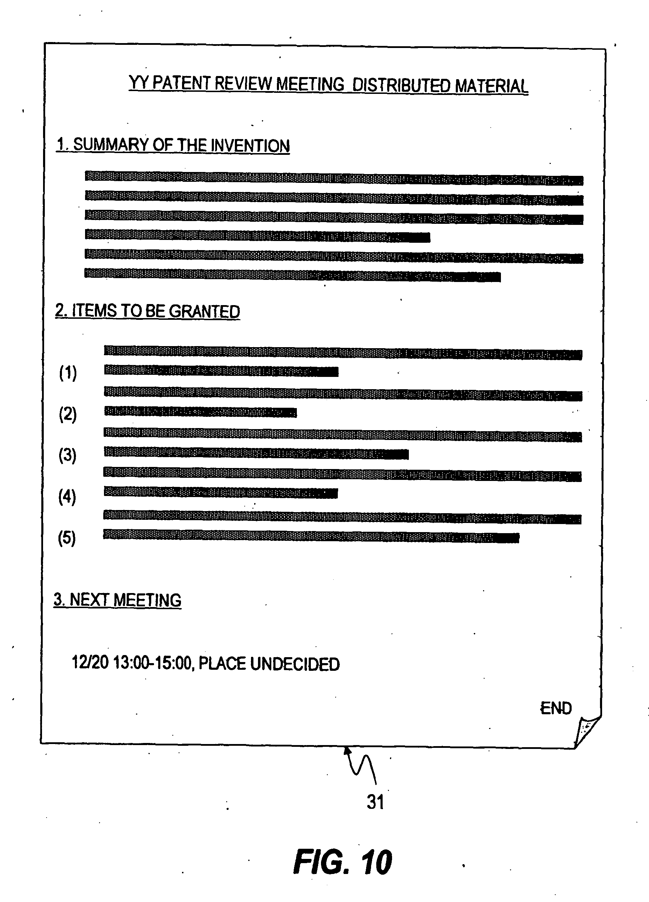

FIG. 10 is an explanatory diagram of a document 31 registered in the content server 11 according to the first embodiment.

The user registers the document (distributed material) 31 as shown in this drawing in the content server 11 in association with an event at which the document 31 has been distributed.

The document 31 is attached with a dot pattern different from another document. In other words, when contents of respective documents are printed, dot patterns different for each of the documents are printed. Further, the documents having different dot patterns have different document IDs 220 and are distributed to different users.

It should be noted that the distributed material 31 may be a document created electronically by document creation software or the like, or may be obtained by converting a handwritten document into an electronic format.

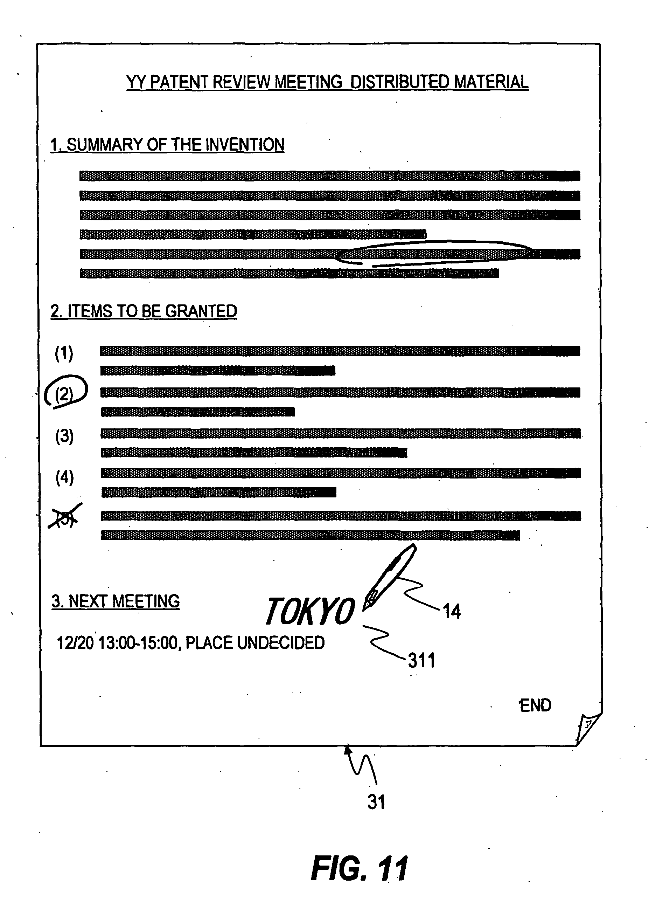

FIG. 11 is an explanatory diagram of the document 31 on which information has been written with the digital pen 14 according to the first embodiment.

This drawing indicates a state where information has been written on the document illustrated in FIG. 10 by using the digital pen 14.

The user annotates information (character, symbol, or the like) 311 on the document 31 with the digital pen 14 during an event (or after the event). During the action, the digital pen 14 periodically obtains absolute coordinates of a location (contact location of a pen tip thereof) where the character or the like has been written and a time when the absolute coordinates are measured. Subsequently, the digital pen 14 transmits the obtained absolute coordinates and obtainment times to the content server 11.

The content server 11 makes an inquiry to the location information server 19 to identify a dot pattern ID and relative coordinates which correspond to the absolute coordinates included in the received stroke information, while identifying a document ID based on the dot pattern ID.

Then, the content server 11 determines a stroke of the written information based on the identified relative coordinates and the measurement time, and creates stroke coordinate information 25 (shown in FIG. 12C). Then, the identified document ID is used to create a new stroke set information 24 (shown in FIG. 12B).

FIG. 12A shows an example of a stroke set 26 according to the first embodiment of this invention.

The stroke set 26 is a set of strokes of characters "Tokyo" 311 shown in FIG.11 written with the digital pen 14. In this embodiment, as shown in the drawing, an upper left-hand corner is set as an origin, a horizontal direction is set as an X axis, and a vertical direction is set as a Y axis, thereby determining locations of the strokes.

As described above, the stroke set is a group of mutually related lines (strokes) and is identified based on a write time of the lines and/or location relations among the lines.

FIG. 12B is a construction diagram of the stroke set information 24 stored in the content server 11 according to the first embodiment.

It should be noted that, in the drawing, stroke set information for the stroke set 26 shown in FIG. 12A is illustrated.

The stroke set information 24 includes, a stroke set ID 241, a pen ID 242, an initial write date and time 243, a corresponding rectangle coordinate 244, a number of strokes 245, and stroke information 246.

The stroke set ID 241 is a unique identifier of the stroke set.

The pen ID 242 is an identifier of the digital pen 14 used to annotate the stroke set.

The initial write date and time 243 is a date and time of initial writing of the stroke set.

The corresponding rectangle area 244 is a rectangle area including the stroke set. The corresponding rectangle area 244 include coordinates (relative coordinates) on a document, on which the stroke set has been written, and is expressed by a coordinate of an upper left-hand corner of the rectangular area and a coordinate of a lower right-hand corner.

The number of strokes 245 is the number of lines (strokes) included in the stroke set. Pieces of stroke information 246, whose number is equal to the number of strokes 245, are recorded.

The stroke information 246 includes the number of sampling points 246A and serial numbers 246B.

The number of sampling points 246A is the number of relative coordinates that constitute a corresponding stroke, which has been obtained by the digital pen 14.

Each serial number 246B is a unique identifier of the relative coordinates constituting the stroke obtained by the digital pen 14, and is a link to the stroke coordinate information 25 (shown in FIG. 12C).

FIG. 12C is a construction diagram of the stroke coordinate information 25 stored in the content server 11 according to the first embodiment.

The stroke coordinate information 25 includes a serial number 251, an X coordinate 252, a Y coordinate 253, and an obtainment time 254.

The serial number 251 is a unique identifier of the relative coordinate obtained by the digital pen 14.

The X coordinate 252 is a relative coordinate in a direction of the X axis shown in FIG. 12A and is expressed in units of millimeters, for instance.

The Y coordinate 253 is a relative coordinate in a direction of the Y axis shown in FIG. 12A and is expressed in units of millimeters, for instance.

The obtainment time 254 expresses an obtainment time of the relative coordinates by the digital pen 14. It should be noted that in the example shown in the diagram, in the obtainment time field 254, an elapsed time from an initial write time 242 is recorded.

FIG. 13 is a construction diagram of the user information 27 stored in the content server 11 according to the first embodiment.

The user information 27 includes, a user ID 271, a name 272, a section 273, a position 274, a possession pen ID 275, and a security level 276.

The user ID 271 is a unique identifier of the user.

The name 272 is the name of the user.

The section 273 is a section to which the user belongs.

The position 274 is a position of the user.

The possession pen ID 275 is a unique identifier of the digital pen 14 possessed by the user.

The document security level 276 is a right of the user to access a confidential document. As will be described later, it is determined whether or not the user can view the document based on the security level 276 of the user and the security level 226 (shown in FIG. 8A) of the document.

Next, description will be made of the processing of the document management system according to the first embodiment.

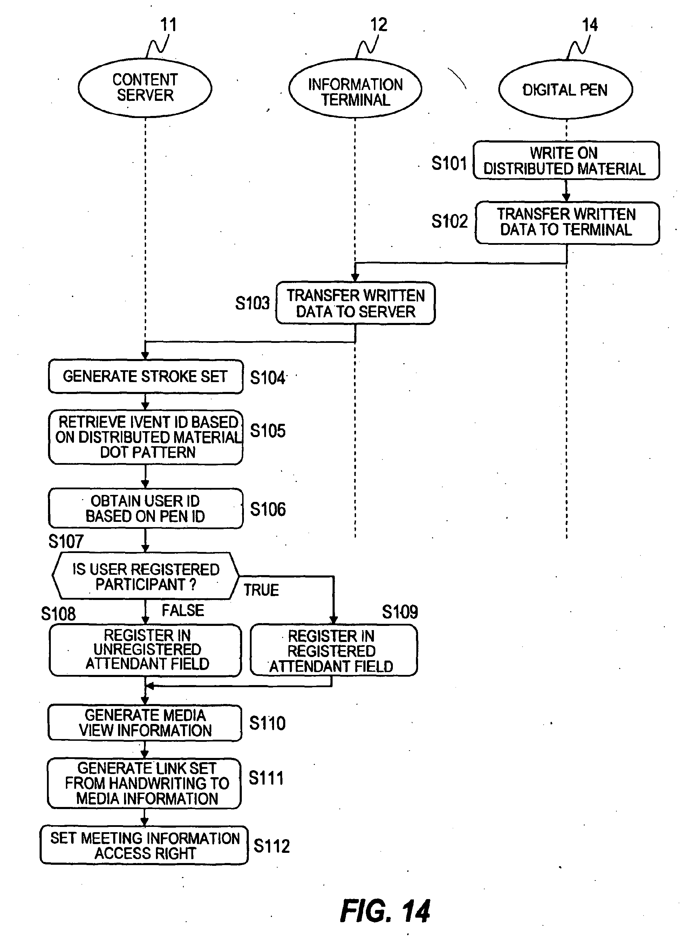

FIG. 14 is a flowchart of written-data accumulating processing according to the first embodiment.

The first embodiment will be described by taking an example case where the user uses the digital pen 14 that is personally dedicated to the user and a distributed material prepared by a organizer of the meeting. In other words, in the first embodiment, the content server 11 can identify the user based on the pen ID of the digital pen and can also identify the user based on the document ID of the distributed material.

It should be noted that there can be 4 patterns depending on which of personally-dedicated use and shared use the digital pen is put to and on which of a distributed material and one's own material an writing sheet is. Processings in the other patterns will be described later as a second embodiment to a fourth embodiment.

During the event, an attendant (user) at the meeting uses the digital pen 14 to annotate a memo or the like on the distributed material (S101). In this step, the digital pen 14 periodically photographs a dot pattern during writing (during detection by the writing pressure sensor), and obtains the absolute coordinates of a position where the writing has been conducted.

After that, the user connects the digital pen 14 to the information terminal 12, and transmits the absolute coordinates obtained by the digital pen 14, the times at which the absolute coordinates were obtained, and the pen ID, from the digital pen 14 to the information terminal 12 (S102).

Upon reception of the absolute coordinates, the times at which the absolute coordinates were obtained, and the pen ID, from the digital pen 14, the information terminal 12 transmits the received data to the content server 11(S103).

The content server 11 generates the stroke coordinate information 25 and the stroke set information 24 from the absolute coordinates obtained by the digital pen 14 (S104).

To be specific, the content server 11 determines an arbitrary coordinate origin point, and generates the stroke coordinate information 25 from differences between the coordinate origin point and the respective coordinates and the times at which the coordinates were obtained. After that, the content server 11 identifies a set of mutually related lines (stroke set) based on the times when the lines were written and/or the locational relationships between the lines, and generates the stroke set information 24.

After that, the content server 11 identifies the event ID of the meeting based on a distributed material dot pattern (S105). To be specific, the content server 11 transmits the absolute coordinates obtained by the digital pen 14 to the location information server 19. The location information server 19 identifies the dot pattern ID and the relative coordinates based on the absolute coordinates transmitted from the content server 11, and transmits the dot pattern ID and the relative coordinates to the content server 11. The content server 11 searches the event information 21 with the obtained dot pattern ID as a search key to identify an event including the dot pattern ID.

Subsequently, the content server 11 searches the user information 27 with the pen ID obtained from the digital pen 14 as a search key to identify the user who possesses the digital pen (S106).

Then, the content server 11 judges whether or not the user ID of the identified user is included as the registered attendant 214B (S107)

When the identified user ID is not included as the registered attendant 214B, the content server 11 judges that the user is an unregistered attendant, increments the unregistered attendant count 215A, and registers the user in the unregistered participant field 215B (S108).

On the other hand, when the identified user ID is included in the registered attendant 214B, the user is found to be a registered attendant, so the content server 11 updates the presence/absence data of the corresponding user in the registered attendant field 214B to "present" (S109).

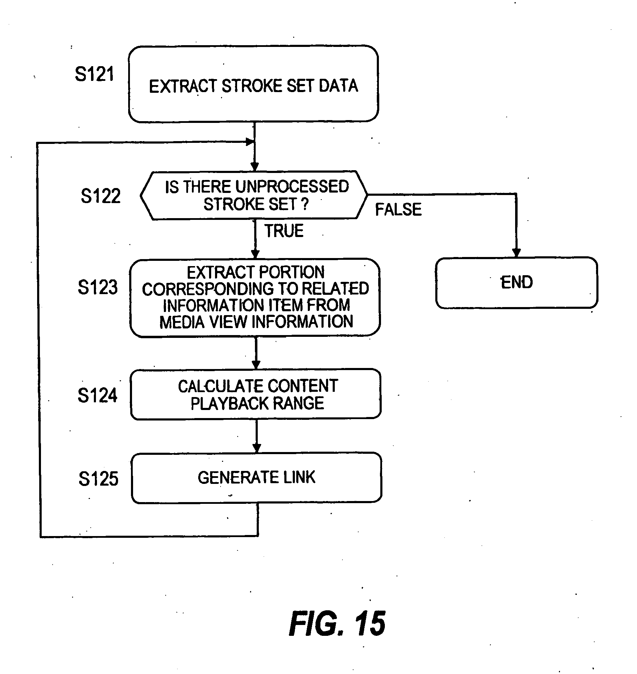

After that, when the user requests viewing of a content, the content server 11 generates the media view information 28 (S110). It should be noted that media view information is also generated while the video of the meeting is recorded. Therefore, it is possible to associate a stroke set with the content in Step S123 of FIG. 15.

Subsequently, the content server 11 generates the handwritten memo-related information 23 (S111) . To be specific, the content server 11 identifies a time period corresponding to the stroke set information 24 generated in Step S104, a document that was being used during the time period, a video that was being recorded during the time period, and audio data that was being recorded during the time period. Then, the content server 11 registers the identified data as related information items in the handwritten memo-related information 23. It should be noted that FIG. 15 will be used to describe detailed processing of generating the handwritten memo-related information.

Subsequently, based on the security level 276 (shown in FIG. 13) of the user and the security level 226 (shown in FIG. 8A) of the document, the content server 11 determines whether or not the user can view the document, and sets a meeting information access right (S112).

FIG. 15 is a flowchart of processing of generating a link set from a handwritten memo to each type of information obtained during the meeting according to the first embodiment, showing details of the processing of Step S111 shown in FIG. 14.

First, stroke sets generated in Step S104 of FIG. 14 are extracted one by one (S121).

Second, it is judged whether or not there is any stroke set left unprocessed (S122). As a result, when there is an unprocessed stroke set, the processing advances to Step S123. On the other hand, when there is no unprocessed stroke set, the handwritten memo-related information 23 has been generated for every stroke set, so the processing is ended.

In Step S123, the media view information 28 is searched to identify a content that was being viewed during the time when the stroke set was written. It should be noted that the time period during which the stroke set was written is obtained from the initial write date and time denoted as reference numeral 243 in FIG. 12B within the stroke set information and a maximum value of the obtainment times denoted as reference numeral 254 in FIG. 12C within the stroke coordinate information.

After that, an overlapping range between a viewing duration of the identified content and a time period during which the stroke set was generated is extracted. Then, a playback range of the content corresponding to the stroke set is determined (S124).

The playback range is determined simply by extracting an overlapping range between an write time period of the stroke set and the viewing duration of the content. Further, the viewing duration of the content added with a predetermined time period before and after (for instance, one minute each before and after) the writing of the stroke set may be set as the playback duration. Further, the playback duration may be determined by the view unit of the content which includes the write time period of the stroke set. Further, times at which scenes within the content are changed may be detected to set as the playback duration a time period which includes the write time period of the stroke set and which is defined between the detected positions at which the scenes are changed.

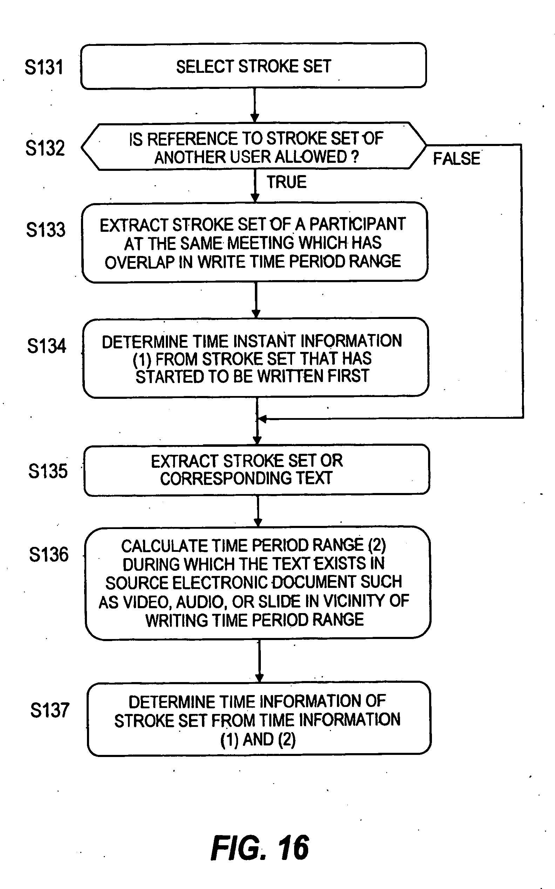

In this step, the initial write time of the stroke set may be used as it is, but time information of the content corresponding to the stroke set may be determined by a method shown in FIG. 16, and may be used instead.

Lastly, the related information item 232 is registered, and the handwritten memo-related information 23 is generated (S125).

FIG. 16 is a flowchart of processing of determining time information of the stroke set according to the first embodiment, showing details of the processing of Step S124 shown in FIG. 15.

First, the stroke set for which the playback range of a content is to be determined is determined (S131).

After that, the distributed material information 22 of the distributed material corresponding to the event information 21 on the meeting in which the user participated is accessed. Then, it can be judged whether or not the user is allowed to access the distributed material based on the document security level 226 of the distributed material and the security level 276 of the user. When the access is allowed, based on the security level of the user and View Security of the stroke set, it is further judged whether or not reference to a stroke set of another user is allowed (S132). As a result of the judgment, when the reference to the stroke set of the another user is allowed, the processing advances to Step S133, and information on the stroke set of the another user is also used to determine the playback duration of the content. On the other hand, when the reference to the stroke set of the another user is not allowed, the processing advances to Step S135.

In Step S133, the stroke set which was written by a participant at the same meeting and which has an overlap in write time period range is extracted.

To be specific, the stroke set information 24 is searched with the write time period of the stroke set as a search key to identify the stroke set having an overlap in write time period. The user information 27 is then searched with the pen ID 242 of the stroke set as a search key to identify the user who written the stroke set. The event information 21 is then searched with the user ID 271 of the identified user and the write time period of the stroke set as search keys to identify the event which the user attended. Then, another user who attended the event is identified.

After that, the user information 27 is searched with the identified user ID as a search key to identify a digital pen possessed by the attendant user. The stroke set information 24 is then searched with the possession pen ID 275 of the identified digital pen and the write time period of the stroke set as search keys to identify stroke sets which were written by the attendant at the same meeting and which have an overlap in write time period.

After that, of the identified stroke sets having an overlap in write time period, the initial write date and time 243 of the stroke set that has started to be written first is set as time instant information (1) (S134).

Subsequently, the stroke set is converted into a text to generate text data (S135).

Then, it is judged whether or not the generated text data exists in a video, audio, slide, and the like in the vicinity of the write time period range of the stroke set. When the text data exists in the data, a time instant at which the text data existed is set as time instant information (2) (S136).

In this step, pattern matching using graphic data may be used in addition to matching using text data.

After that, the time information of the stroke set is determined based on the time information (1) and the time information (2) (S137). Then, the playback range of the content is determined based on the determined time information (Step S124 of FIG. 15).

To be specific, the earlier one of the time information (1) and the time information (2) may be set as the time information of the stroke set. Alternatively, of the time information (1) and (2), the one closer to the initial write date and time of the stroke set may be selected. Further, the user may choose one of the time information (1) and the time information (2).

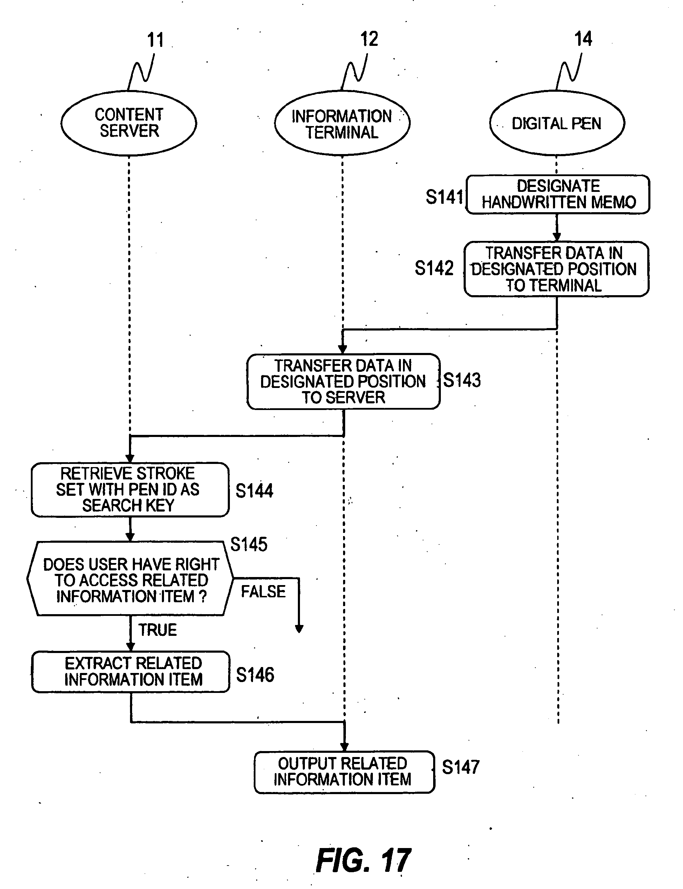

FIG. 17 is a flowchart of processing of retrieving various kinds of information obtained during the meeting based on a handwritten memo according to the first embodiment. It should be noted that FIG. 17 shows a case where users use sheets having the same dot pattern, for instance, a case where the distributed materials have the same dot pattern or a case where the users have notebooks having the same dot pattern.

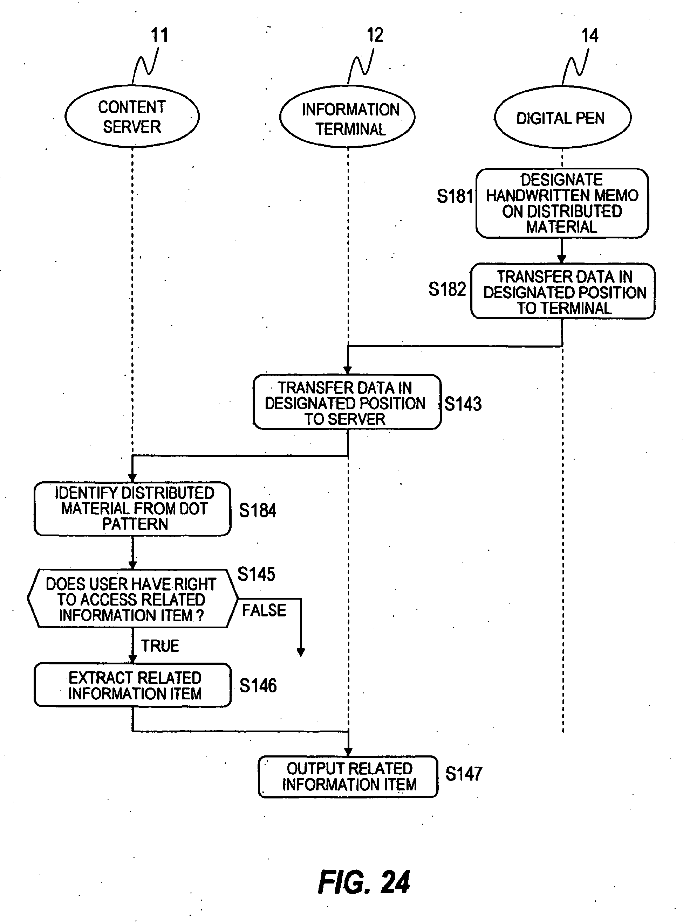

In other words, FIG. 17 shows a case where paper on which a user annotates with the digital pen is insufficient to identify the user who possesses the document. It should be noted that a case of different dot patterns will be described as the example of this invention with reference to FIG. 24.

First, the user designates a handwritten memo written on a paper medium with the digital pen possessed by the user (S141). At this time, the digital pen 14 photographs a dot pattern at a position of the designation to obtain the absolute coordinates of the designated position.

After that, the user connects the digital pen 14 to the information terminal 12, and transmits the absolute coordinates obtained by the digital pen 14, the time at which the absolute coordinates were obtained, and the pen ID, from the digital pen 14 to the information terminal 12 (S142).

Upon reception of the absolute coordinates, the time at which the absolute coordinates were obtained, and the pen ID, from the digital pen 14, the information terminal 12 transmits the received data to the content server 11 (S143).

The content server 11 uses the pen ID of the digital pen 14 to identify the stroke set (S 144).

To be specific, the content server 11 searches the stroke set information 24 with the pen ID as a search key to extract the stroke set that was written with the digital pen 14.

Further, the content server 11 transmits the absolute coordinates obtained by the digital pen 14 to the location information server 19. The location information server 19 identifies the dot pattern ID and the relative coordinates based on the absolute coordinates transmitted from the content server 11, and transmits the dot pattern ID and the relative coordinates to the content server 11. The content server 11 collates the obtained relative coordinates with the extracted stroke set to identify the designated handwritten memo (stroke set ID).

After that, the content server 11 references the handwritten memo-related information 23 of the identified stroke set ID to identify the related information item.

Subsequently, the content server 11 searches the user information 27 with the pen ID of the digital pen 14 as a search key to identify the user who possesses the digital pen.

After that, the content server 11 judges whether or not the user has a right to view the related information item (S145). The right is defined by the document security level denoted by reference numeral 226 in FIG. 8A of the identified distributed material, right information defined based on the security level denoted by reference numeral 276 in FIG. 13 of the user, and the security information (View Security) specified in the related information item.

When it is judged that the user does not have the right to view the information item related to the stroke set, the content server 11 examines the right of the next related information item. On the other hand, when it is judged that the user has the right to view the information item related to the stroke set, the content server 11 reads out the related information item, and transmits the related information item to the information terminal 12 (S146).

After that, the information terminal 12 outputs the related information item transmitted from the content server 11 (S147).

Each processing of the first embodiment has been described above with the content server 11 as a main subject. However, the content server 11 may store various kinds of information and provide the stored information via the network 17. In other words, a management server may be provided separately from the content server 11 in order to execute processing of retrieval, judgment, or the like.

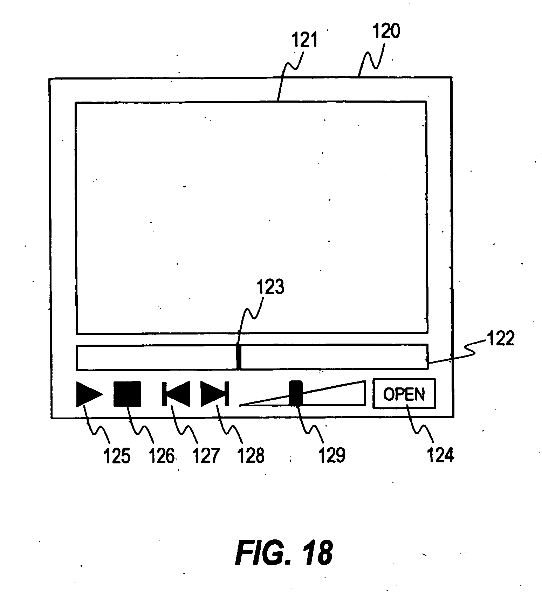

FIG. 18 is an explanatory diagram of a content viewer 120 according to the first embodiment.

The content viewer 120 is constituted by software running on the information terminal 12, and operates a content sent from the content server 11 when the user views the content.

The content viewer 120 has a display screen 121. Displayed on the display screen is the content sent from the content server 11.

The display screen 121 is provided in its lower part with a time scale bar 122. The time scale bar 122 is provided with a marker 123. The marker 123 moves within the time scale bar 122, indicating a state of progress of the viewed content. In addition, the user can change a viewing position by moving the marker 123.

Provided below the time scale bar 122 are an open button 124 for opening a content file, a volume bar 129, the fast-forward button 128, a rewind button 127, a stop button 126, and a play button 125.

As described above, the times at which the user operates those buttons are transmitted to the content server 11, and recorded in the content server 11. For instance, the operations of the play button 125 and the stop button 126 are recorded in the view unit 284 of the media view information 28. Similarly, the operations of the fast-forward button 128 and the fast-forward button 127 are recorded in the related information item 232 of the handwritten memo-related information 23.

### (Second Embodiment)

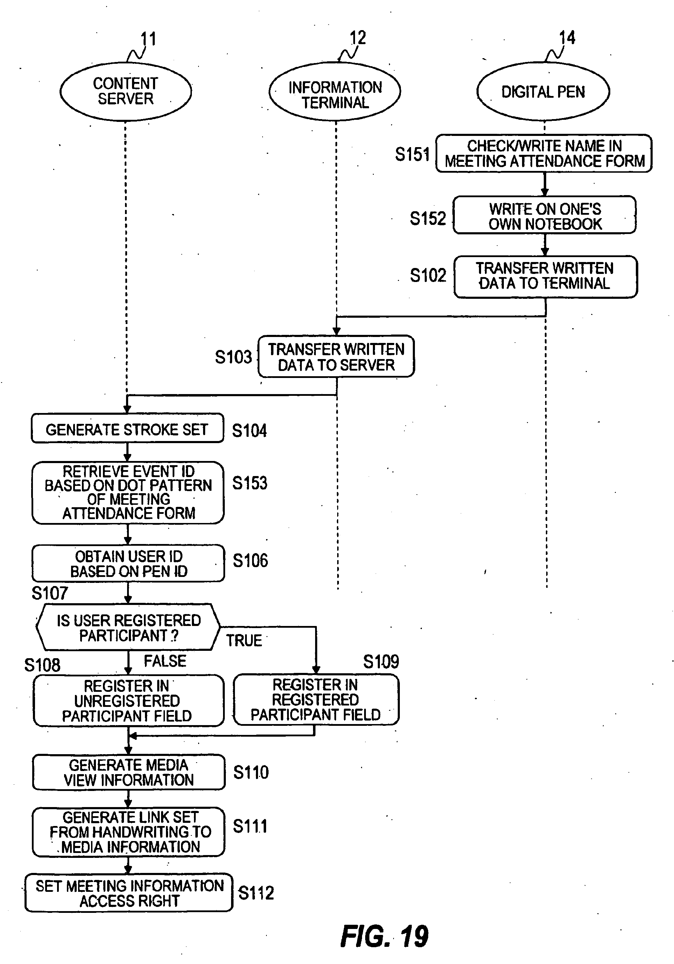

FIG. 19 is a flowchart of written-data accumulating processing according to the second embodiment of this invention.

The second embodiment will be described by taking an example case where the user uses the personally-dedicated digital pen 14 and the user's own paper medium (e.g., notebook). In other words, in the second embodiment, the content server 11 can identify the user based on the pen ID of the digital pen but cannot identify the user based on the document ID. It should be noted that the description of the second embodiment will be given to parts different from the first embodiment described above, while description of the same parts, which are denoted by the same reference symbols, will be omitted.

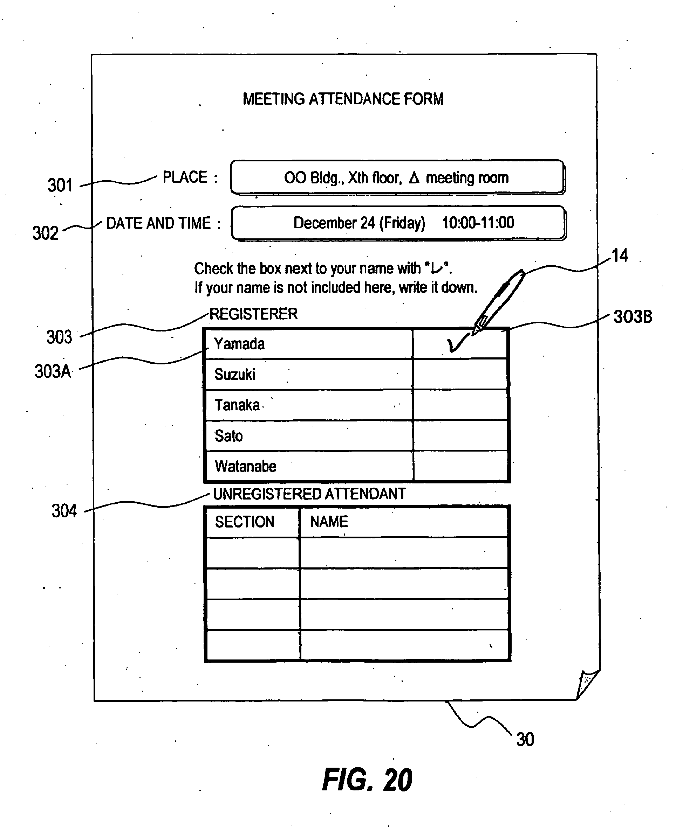

First, before the event starts (or during the event), an attendant (user) at the meeting uses the digital pen 14 to check or write his/her name in a meeting attendance form 30 (shown in FIG. 20) (S151).

During the event, the user uses the digital pen 14 to annotate a memo or the like on the user's own paper medium such as in a notebook (S152). After that, the user connects the digital pen 14 to the information terminal 12, and transmits the absolute coordinates obtained by the digital pen 14, the times at which the absolute coordinates were obtained, and the pen ID, from the digital pen 14 to the information terminal 12 (S102).

The information terminal 12 transmits the data received from the digital pen 14 to the content server 11 (S103).

The content server 11 generates the stroke coordinate information 25 and the stroke set information 24 from the absolute coordinates obtained by the digital pen 14 (S104).

The processing of Steps S 102 to S104 is the same as that in the first embodiment described above.

Subsequently, the content server 11 identifies the event ID of the meeting based on the dot pattern ID corresponding to the meeting attendance form 30 (S153). The meeting attendance form 30 (its dot pattern ID) is previously registered in correspondence with the event ID of the meeting. For instance, it is registered in the distributed material 216 of the event information 21.

It should be noted that the meeting attendance form may be substituted by any other document that allows identification of the meeting (that is insufficient to identify the owner of the document in the second embodiment). For instance, the second embodiment can be applied to a case of using the distributed materials whose owners cannot be identified.

After that, the content server 11 identifies the user who possesses the digital pen (S106). Then, depending on whether or not the identified user is included as the registered attendant 214B, the content server 11 registers the user in the unregistered participant field 215B or the registered attendant field 214B (S107 to S109).

Then, the content server 11 generates the media view information 28 (S110), generates the handwritten memo-related information 23 (S111) and sets the meeting information access right (S112).

The processing of Steps S106 to S112 is the same as that in the first embodiment described above.

FIG. 20 is an explanatory diagram of the meeting attendance form 30 according to the second embodiment.

The meeting attendance form 30 is printed along with a specific dot pattern. Used for the meeting attendance form 30 is a dot pattern of the dot pattern ID included as the distributed material 216 of the event information. Therefore, when the user designates an arbitrary position on the meeting attendance form 30, the content server 11 can identify the dot pattern ID corresponding to the meeting attendance form 30, and can further identify the meeting (event ID).

The meeting attendance form 30 includes a place 301 of the event, a date and time 302, a registerer 303, and a non-registered attendant 304. The user who attends at the event fills in the meeting attendance form 30.

The place 301 is shown as a blank box. The user uses the digital pen 14 to fill in the box with a place where the event is held.

The date and time 302 is shown as a blank box. The user uses the digital pen 14 to fill in the box with a date and time when the event is held.

The content server 11 uses a character recognition technology to recognize characters written in the place 301 and the date and time 302 with the digital pen 14 and converts the characters into text data. The resultant text data of the place where the event is held is registered as the place 213 of the event information, and the resultant text data of the date and time when the event is held is registered as the date and time 212 of the event information.

It should be noted that the place where the event is held may be registered by providing the place 301 with a plurality of areas associated with places where events are held and allowing the user to choose the area. Similarly, the date and time when the event is held may be registered by providing the date and time 302 with a plurality of areas associated with dates and times when events are held and allowing the user to choose the area.

The registerer 303 is provided with an expected attendant's name 303A and a check field 303B. The user designates the check field 303B corresponding to one's own name with the digital pen 14. For instance, this explanatory diagram shows a state where Mr./Ms. Yamada has checked for his/her presence. The content server 11 identifies the attendant based on relative coordinates designated with the digital pen 14. Then, the content server 11 updates the presence/absence data of the registered attendant field 214B of the identified user into "present".

The unregistered person 304 is provided with fields to be filled in with an unexpected attendant's name. The user fills in the unregistered person 304 with a section of a company to which the user belongs and his/her own name when his/her own name is not found as the registerer 303. The content server 11 searches the user information 27 with the pen ID of the digital pen 14 as a search key to identify the attendant, the digital pen 14 being used to fill in the unregistered person 304 with his/her own name and the section to which the user belongs. Then, the content server 11 increments the unregistered attendant count 215A, and registers the user ID of the identified attendant in the unregistered participant field 215B.

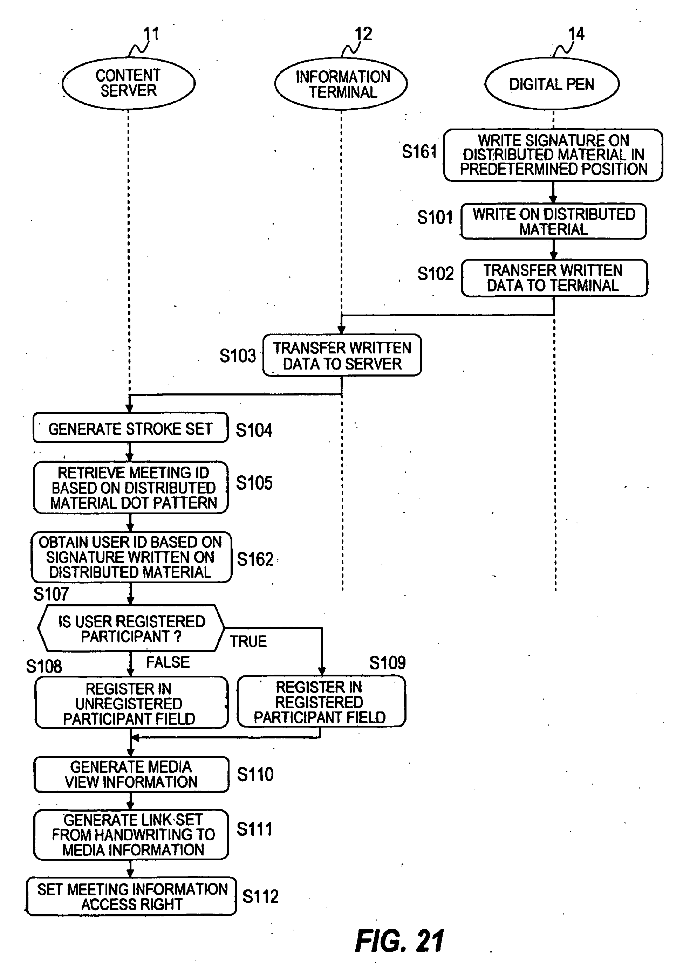

FIG. 21 is a flowchart of written-data accumulating processing according to an example of this invention.

The example will be described by taking an example case where the user uses the shared-use digital pen 14 and a distributed material prepared by a host of the meeting. In other words, in the example, the content server 11 cannot identify the user based on the pen ID of the digital pen, but can identify the user based on the document ID of the distributed material. It should be noted that the description of the third example will be given to parts different from the first and second embodiments described above, while description of the same parts, which are denoted by the same reference symbols, will be omitted.

Before the event starts (or during the event), an attendant (user) at the meeting uses the digital pen 14 to write his/her signature on the distributed material (S161).

The user uses the digital pen 14 during the event to annotate a memo or the like on the distributed material (S101). After that, the user connects the digital pen 14 to the information terminal 12, and transmits the absolute coordinates obtained by the digital pen 14, the times at which the absolute coordinates were obtained, and the pen ID, from the digital pen 14 to the information terminal 12 (S102).

The information terminal 12 transmits the data received from the digital pen 14 to the content server 11 (S103).

The content server 11 generates the stroke coordinate information 25 and the stroke set information 24 from the absolute coordinates obtained by the digital pen 14 (S104).

After that, the content server 11 identifies the event ID of the meeting based on a distributed material dot pattern (S105).

The processing of Steps S101 to S 105 is the same as that in the first embodiment described above.

Subsequently, the content server 11 identifies the user by the signature written on the distributed material in Step S161 (S162). To be specific, the content server 11 subjects the stroke data of the signature to the pattern matching with signatures registered in the signature DB 158A, to thereby identify the user ID of the user corresponding to the signature.

Then, depending on whether or not the identified user is included as the registered attendant 214B, the content server 11 registers the user in the unregistered participant field 215B or the registered attendant field 214B (S107 to S109). Then, the content server 11 generates the media view information 28 (S110), generates the handwritten memo-related information 23 (S111), and sets the meeting information access right (S112). The processing of Steps S107 to S 112 is the same as that in the first embodiment described above.

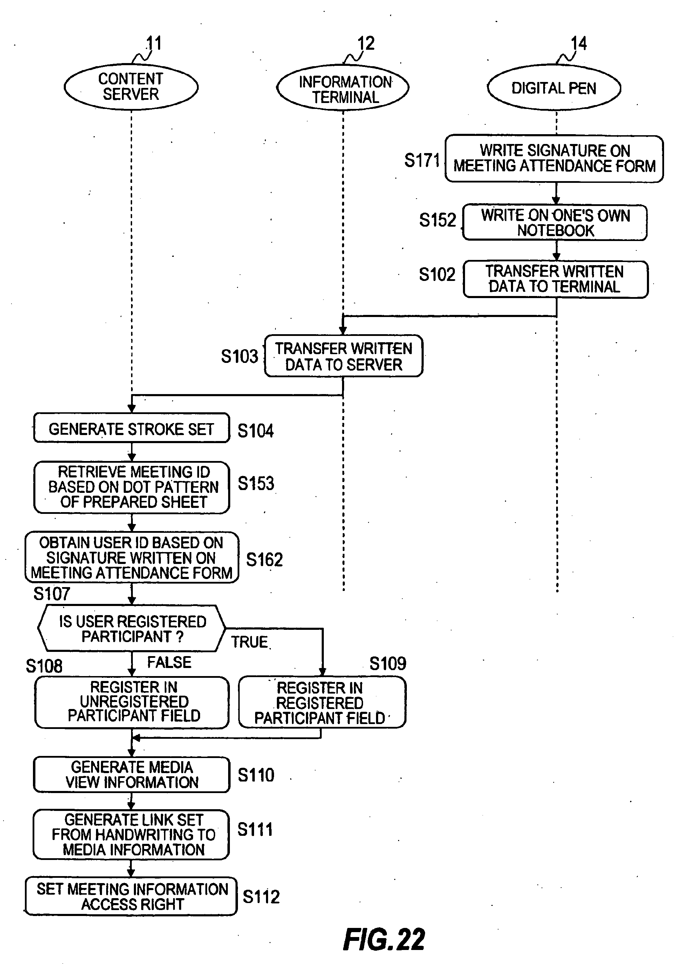

FIG. 22 is a flowchart of written-data accumulating processing according to an example of this invention.

The example will be described by taking an example case where the user uses the shared-use digital pen 14 and the user's own medium (e.g., notebook). In other words, in the example, the content server 11 cannot identify the user based on the pen ID of the digital pen and cannot either identify the user based on the document ID. It should be noted that the description of the example will be given to parts different from the first to second embodiments described above, while description of the same parts, which are denoted by the same reference symbols, will be omitted.

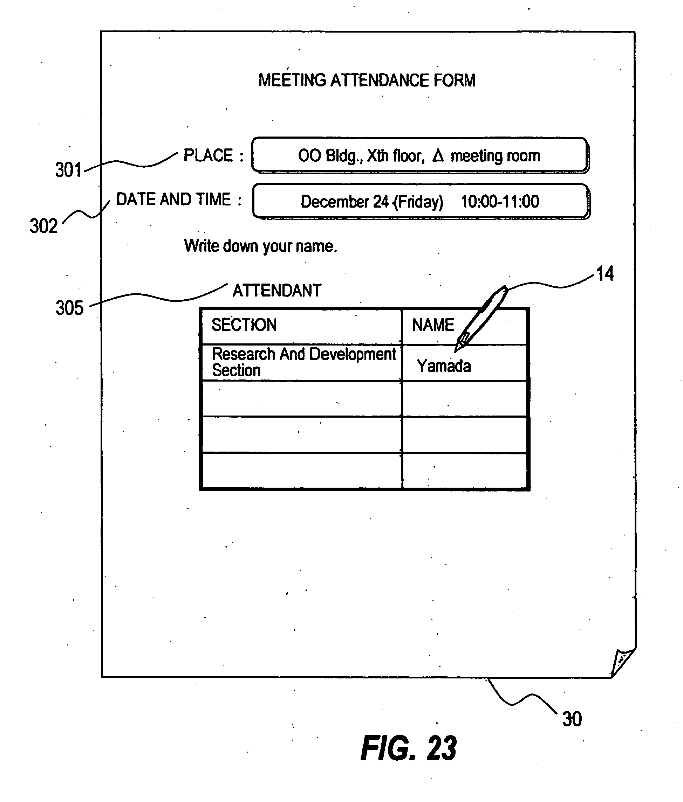

First, before the event starts (or during the event), an attendant (user) at the meeting uses the digital pen 14 to write his/her signature on the meeting attendance form 30 (shown in FIG. 23) (S171).

During the event, the user uses the digital pen 14 to annotate a memo or the like on the user's own paper medium such as in a notebook (S152). After that, the user connects the digital pen 14 to the information terminal 12, and transmits the absolute coordinates obtained by the digital pen 14, the times at which the absolute coordinates were obtained, and the pen ID, from the digital pen 14 to the information terminal 12 (S102).

The information terminal 12 transmits the data received from the digital pen 14 to the content server 11 (S103).

The content server 11 generates the stroke coordinate information 25 and the stroke set information 24 from the absolute coordinates obtained by the digital pen 14 (S104).

The processing of Steps S 102 to S 104 is the same as that in the first embodiment described above.

Subsequently, the content server 11 identifies the event ID of the meeting based on the dot pattern ID corresponding to the meeting attendance form 30 (S153). The meeting attendance form 30 (its dot pattern ID) is previously registered in correspondence with the event ID of the meeting.

It should be noted that the meeting attendance form may be substituted by any other document that allows identification of the meeting (that is insufficient to identify the owner of the document in the fourth example). For instance, the example can be applied to a case of using the distributed materials (along with the same dot pattern) whose owners cannot be identified.

Subsequently, the content server 11 identifies the user by the signature written on the meeting attendance form 30 in Step S171 (S162). To be specific, the content server 11 subjects the stroke data of the signature to the pattern matching with signatures registered in the signature DB 158A, to thereby identify the user ID of the user corresponding to the signature.

After that, depending on whether or not the identified user is included as the registered attendant 214B, the content server 11 registers the user in the unregistered participant field 215B or the registered attendant field 214B (S107 to S109). Then, the content server 11 generates the media view information 28 (S110), generates the handwritten memo-related information 23 (S111), and sets the meeting information access right (S112). The processing of Steps S107 to S 112 is the same as that in the first embodiment described above.

FIG. 23 is an explanatory diagram of a meeting attendance form 30 according to the example.

The meeting attendance form 30 is printed along with a specific dot pattern. Used as the dot pattern of the meeting attendance form 30 is a dot pattern corresponding to the dot pattern ID of the meeting included as the distributed material 216 of the event information. Therefore, when the user designates an arbitrary position on the meeting attendance form 30, the content server 11 can identify the dot pattern ID corresponding to the meeting attendance form 30, and can further identify the meeting (event ID).

The meeting attendance form 30 is filled in by the user who attends at the event. The meeting attendance form 30 includes the place 301 of the event, the date and time 302, and an attendant 305.

The place 301 and the date and time 302 are the same as those of the first embodiment described above.

An attendant 305 is provided with fields to be filled in with an attendant's name. The user fills in the attendant 305 with a section of a company to which the user belongs and his/her own name.

The content server 11 uses the signature DB 158A to identify the user ID of the user corresponding to the signature. Then, the content server 11 updates the presence/absence data of the registered attendant field 214B of the identified user into "present". Alternatively, the content server 11 registers the user ID of the identified attendant in the unregistered participant field 215B.

FIG. 24 is a flowchart of processing of retrieving various kinds of information obtained during the meeting based on a handwritten memo according to an example of this invention.

Unlike the first embodiment described above, the example will be described by taking an example case where users use sheets having different dot patterns, for instance, a case where all the distributed materials have different dot patterns or a case where the users have notebooks having different dot patterns. In other words, the description will be made for a case where paper on which a user annotates with the digital pen allows identification of the user who possesses the document.

It should be noted that the description of the example will be given to parts different from the first embodiment described above, while description of the same parts, which are denoted by the same reference symbols, will be omitted.

First, the user designates a handwritten memo written on the distributed material with the digital pen possessed by the user (S181). At this time, the digital pen 14 photographs a dot pattern in a position of the designation to obtain the absolute coordinates of the designated position.

After that, the user connects the digital pen 14 to the information terminal 12, and transmits the absolute coordinates obtained by the digital pen 14, the time at which the absolute coordinates were obtained, and the pen ID, from the digital pen 14 to the information terminal 12 (S182).

Upon reception of the absolute coordinates, the time at which the absolute coordinates were obtained, and the pen ID, from the digital pen 14, the information terminal 12 transmits the received data to the content server 11 (S143).

The content server 11 identifies the distributed material based on the absolute coordinates obtained by the digital pen 14 (S184).

To be specific, the content server 11 transmits the absolute coordinates obtained by the digital pen 14 to the location information server 19. The location information server 19 identifies the dot pattern ID and the relative coordinates based on the absolute coordinates transmitted from the content server 11, and transmits the dot pattern ID and the relative coordinates to the content server 11. The content server 11 searches the distributed material information 22 with the obtained dot pattern ID as a search key to identify a distributed material using the dot pattern ID.

Then, the content server 11 extracts the stroke set included in the distributed material information 22 of the identified distributed material ID. Further, the content server 11 collates the obtained relative coordinates obtained from the location information server 19 with the corresponding rectangle coordinates 244 of the extracted stroke set to identify the designated handwritten memo (stroke set ID).

Subsequently, the content server 11 searches the user information 27 with the pen ID of the digital pen 14 as a search key to identify the user who possesses the digital pen.

After that, the content server 11 judges whether or not the user has a right to view the related information item (S145).

When it is judged that the user does not have the right to view the information item related to the stroke set, the content server 11 examines the next related information item. On the other hand, when it is judged that the user has the right to view the information item related to the stroke set, the content server 11 reads out the related information item, and transmits the related information item to the information terminal 12 (S146).

After that, the information terminal 12 outputs the related information item transmitted from the content server 11 (S147).

### INDUSTRIAL APPLICABILITY

This invention is useful for a system for managing information recorded on a paper medium as electronic data, in particular, suitable for a document management system.

## Claims

1. An information management system, comprising:
a coordinate pointing device (14) for identifying a location on a paper medium; and
a content server (11) for storing data,
the content server storing document data (22, 23), event data (21) of an event, user information (27) and stroke information (24),
the document data comprising information (22) printed on paper medium used for the event by a user,
the event data including video data (217B) obtained during the event, and
the stroke information including coordinates (25) of the location identified by the coordinate pointing device by the user on a paper medium related to the document data during or after the event, a time at which the location is identified and a pen identifier (242) for identifying the coordinate pointing device used for identifying the location,
the user information including a pen identifier (275) for identifying the coordinate pointing device of a user and security information (276),
wherein the content server is configured to:
obtain information on attendance of the event;
set a meeting information access right indicating whether a user can view the document based on the security information set for the user depending on whether or not he attended the event, and on security information set for the event data;
generate media view information (26) including information of a view unit;
generate hand-written memo-related information (23) indicating a stroke set written on distributed material;
generate relation information (232) indicating a relation between the stroke set and the video of the event;
specify, when the location of the stroke information on the paper medium related to the document data is designated by the coordinate pointing device, the stroke information corresponding to the designated location based on the pen identifier of the coordinate pointing device which designates the stroke data;
retrieve the event data related to the specified stroke information based on the relation information;
judge, based on the set meeting information access right, whether or not the user who designates the location of the stroke information is allowed to view the retrieved event data; and
transmit the event data in a case where the user is allowed to view the event data as a result of the judgement;
wherein the content server is further configured to:
extract other stroke information (24) generated during a time period having an overlap with a generation time period for the identified stroke information;
identify the stroke information having an earliest time out of the extracted stroke information; and
transmit the event data corresponding to a time at which the identified earliest stroke information was generated.

2. The information management system according to claim 1, wherein the content server (11) is further configured to obtain information on attendance of the event by checking the presence of a user name in a meeting attendance form (30).

3. The information management system according to claim 1, wherein the content server (11) is further configured to obtain information on attendance of the event by detecting the writing of a user name at predetermined position on the distributed material.

4. The information management system according to claim 1, wherein the content server (11) is further configured to obtain information on attendance of the event by detecting the writing of a user name on a meeting attendance form (30).

5. The information management system according to claim 3, wherein the content server (11) is configured, upon generating relation information (232), to:
identify a time period corresponding to the stroke set and the video data that was recorded during the time period;
extract an overlapping range between a viewing duration of the identified video data and a time period during which the stroke set has been written.

6. The information management system according to claim 5, wherein the content server (11) is configured to:
generate text data from the stroke set;
judge whether the generated text data exist in a video and the like in the vicinity of the write time period range of the stroke set;
determine a playback range of the content based on the text data existing range in the video.

## Patentansprüche

1. Informationsverwaltungsystem, umfassend:
ein Koordinatenzeigegerät (14) zum Identifizieren eines Ortes auf einem Papiermedium und
einen Inhaltsserver (11) zum Speichern von Daten,
wobei der Inhaltsserver Dokumentdaten (22, 23), Ereignisdaten (21) eines Ereignisses, Benutzerinformationen (27) und Strichinformationen (24) speichert,
wobei die Dokumentdaten Informationen (22) umfassen, die auf einem für das Ereignis von einem Benutzer verwendeten Papiermedium gedruckt sind,
wobei die Ereignisdaten während des Ereignisses erhaltene Videodaten (217B) enthalten und
wobei die Strichinformationen enthalten: Koordinaten (25) des Ortes, der vom Benutzer mit dem Koordinatenzeigegerät auf einem mit den Dokumentdaten in Zusammenhang stehenden Papiermedium während oder nach dem Ereignis identifiziert worden ist, einen Zeitpunkt, zu dem der Ort identifiziert wird, und eine Stiftidentifikation (242) zum Identifizieren des zum Identifizieren des Ortes verwendeten Koordinatenzeigegeräts,
wobei die Benutzerinformationen eine Stiftidentifikation (275) zum Identifizieren des Koordinatenzeigegeräts eines Benutzers und Sicherheitsinformationen (276) enthalten,
wobei der Inhaltsserver dazu ausgelegt ist:
Informationen über Teilnahme am Ereignis zu erhalten;
ein Termininformationszugriffsrecht, das angibt, ob ein Benutzer das Dokument ansehen kann, auf der Grundlage der für den Benutzer gesetzten Sicherheitsinformationen in Abhängigkeit davon, ob er am Ereignis teilgenommen hat oder nicht, und von für die Ereignisdaten gesetzten Sicherheitsinformationen zu setzen;
Medienansichtsinformationen (26) zu erzeugen, die Informationen einer Ansichtseinheit enthalten;
handschriftliche notizbezogene Informationen (23) zu erzeugen, die eine auf verteiltem Material geschriebene Strichmenge anzeigen;
Relationsinformationen (232) zu erzeugen, die einen Zusammenhang zwischen der Strichmenge und dem Video des Ereignisses angeben;
wenn der Ort der Strichinformationen auf dem zu den Dokumentdaten gehörenden Papiermedium vom Koordinatenzeigegerät gewählt worden ist, die dem ausgewählten Ort entsprechenden Strichinformationen auf der Grundlage der Stiftidentifikation des Koordinatenzeigegeräts, das die Strichdaten auswählt, zu spezifizieren;
die zu den spezifizierten Strichinformationen gehörigen Ereignisdaten auf der Grundlage der Relationsinformationen zu beziehen;
auf der Grundlage des gesetzten Termininformationszugriffsrechts zu beurteilen, ob der Benutzer, der den Ort der Strichinformationen auswählt, die bezogenen Ereignisdaten ansehen darf oder nicht; und
die Ereignisdaten zu übertragen, wenn der Benutzer im Ergebnis der Beurteilung die Ereignisdaten ansehen kann;
wobei der Inhaltsserver ferner dazu ausgelegt ist:
andere Strichinformationen (24) zu extrahieren, die während eines Zeitraums erzeugt worden sind, der einen Erzeugungszeitraum für die identifizierten Strichinformationen überlappt;
die Strichinformationen mit einem frühesten Zeitpunkt aus den extrahierten Strichinformationen zu identifizieren; und
die Ereignisdaten zu übertragen, die einem Zeitpunkt entsprechen, zu dem die identifizierten frühesten Strichinformationen erzeugt worden sind.

2. Informationsverwaltungssystem nach Anspruch 1, wobei der Inhaltsserver (11) ferner dazu ausgelegt ist, Informationen über die Teilnahme am Ereignis durch Überprüfen des Vorliegens eines Benutzernamens in einem Terminteilnahmeformular (30) zu erhalten.

3. Informationsverwaltungssystem nach Anspruch 1, wobei der Inhaltsserver (11) ferner dazu ausgelegt ist, Informationen über Teilnahme am Ereignis durch Detektieren des Schreibens eines Benutzernamens an einer vorgegebenen Position auf dem verteilten Material zu erhalten.

4. Informationsverwaltungssystem nach Anspruch 1, wobei der Inhaltsserver (11) ferner dazu ausgelegt ist, Informationen über Teilnahme am Ereignis durch Detektieren des Schreibens eines Benutzernamens auf einem Terminteilnahmeformular (30) zu erhalten.

5. Informationsverwaltungssystem nach Anspruch 3, wobei der Inhaltsserver (11) beim Erzeugen von Relationsinformationen (232) dazu ausgelegt ist:
einen der Strichmenge entsprechenden Zeitraum und die Videodaten, die während des Zeitraums aufgezeichnet wurden, zu identifizieren;
einen Überlappungsbereich zwischen einer Ansichtdauer der identifizierten Videodaten und einem Zeitraum, während dessen die Strichmenge geschrieben worden ist, zu extrahieren.

6. Informationsverwaltungsystem nach Anspruch 5, wobei der Inhaltsserver (11) dazu ausgelegt ist:
Textdaten aus der Strichmenge zu erzeugen;
zu beurteilen, ob die erzeugten Textdaten in einem Video oder ähnlichem in der Nähe des Bereichs des Schreibzeitraums der Strichmenge vorhanden sind;
einen Playback-Bereich des Inhalts auf der Grundlage des Bereichs im Video, in dem die Textdaten vorhanden sind, zu bestimmen.

## Revendications

1. Système de gestion d'informations, comportant :
un dispositif de pointage de coordonnées (14) pour identifier un emplacement sur un support papier, et
un serveur de contenu (11) pour mémoriser des données,
le serveur de contenu mémorisant des données de document (22, 23), des données d'événement (21) d'un événement, des informations d'utilisateur (27) et des informations de traits (24),
les données de document comportant des informations (22) imprimées sur un support papier utilisé pour l'événement par un utilisateur,
les données d'événement incluant des données vidéo (217B) obtenues pendant l'événement, et
les informations de traits incluant des coordonnées (25) de l'emplacement identifié par le dispositif de pointage de coordonnées par l'utilisateur sur un support papier associé aux données de document pendant ou après l'événement, un instant auquel l'emplacement est identifié et un identifiant de stylo (242) pour identifier le dispositif de pointage de coordonnées utilisé pour identifier l'emplacement,
les informations d'utilisateur incluant un identifiant de stylo (75) pour identifier le dispositif de pointage de coordonnées d'un utilisateur et des informations de sécurité (76),
dans lequel le serveur de contenu est configuré pour :
obtenir des informations sur la fréquentation de l'événement,
définir un droit d'accès à des informations de réunion indiquant si un utilisateur peut visualiser le document sur la base des informations de sécurité définies pour l'utilisateur selon qu'il ait oui ou non assisté à l'événement, et des informations de sécurité définies pour les données d'événement,
générer des informations de visualisation de support (26) incluant des informations d'une unité de visualisation,
générer des informations associées à une note manuscrite (23) indiquant un ensemble de traits écrits sur un support distribué,
générer des informations de relation (232) indiquant une relation entre l'ensemble de traits et la vidéo de l'événement,
spécifier, lorsque l'emplacement des informations de traits sur le support papier associé aux données de document est désigné par le dispositif de pointage de coordonnées, les informations de traits correspondant à l'emplacement désigné sur la base de l'identifiant de stylo du dispositif de pointage de coordonnées qui désigne les données de traits,
récupérer les données d'événement associées aux informations de traits spécifiées sur la base des informations de relation,
déterminer, sur la base du droit d'accès à des informations de réunion, si oui ou non l'utilisateur qui désigne l'emplacement des informations de traits est autorisé à visualiser les données d'événement récupérées, et
transmettre les données d'événement dans un cas où l'utilisateur est autorisé à visualiser les données d'événement en résultat de la détermination,
dans lequel le serveur de contenu est en outre configuré pour :
extraire d'autres informations de traits (24) générées pendant une période de temps ayant un chevauchement avec une période de temps de génération pour les informations de traits identifiées,
identifier les informations de traits ayant l'heure la plus tôt parmi les informations de traits extraites, et
transmettre les données d'événements correspondants à une heure à laquelle les informations de traits identifiées le plus tôt ont été générées.

2. Système de gestion d'informations selon la revendication 1, dans lequel le serveur de contenu (11) est en outre configuré pour obtenir des informations sur la fréquentation de l'événement en contrôlant la présence d'un nom d'utilisateur dans un formulaire de participation à une réunion (30).

3. Système de gestion d'informations selon la revendication 1, dans lequel le serveur de contenu (11) est en outre configuré pour obtenir des informations sur la fréquentation de l'événement en détectant l'écriture d'un nom d'utilisateur à une position prédéterminée sur le support distribué.

4. Système de gestion informations selon la revendication 1, dans lequel le serveur de contenu (11) est en outre configuré pour obtenir des informations sur la fréquentation de l'événement en détectant l'écriture d'un nom d'utilisateur dans un formulaire de participation à une réunion (30).

5. Système de gestion informations selon la revendication 3, dans lequel le serveur de contenu (11) est configuré, lors de la génération d'informations de relations (232), pour :
identifier une période de temps correspondant à l'ensemble de traits et aux données de vidéo qui ont été enregistrés pendant la période de temps,
extraire une plage de chevauchement entre une durée de visualisation des données vidéo identifiées et une période de temps pendant laquelle l'ensemble de traits a été écrit.

6. Système de gestion informations selon la revendication 5, dans lequel le serveur de contenu (11) est configuré pour :
générer des données de texte à partir de l'ensemble de traits,
déterminer si les données de texte générées existent dans une vidéo et analogue à proximité de la plage de période de temps d'écriture de l'ensemble de traits,
déterminer une plage de lecture du contenu sur la base de la plage existante de données de texte de la vidéo.
